(19) **Europäisches Patentamt**
**European Patent Office**
**Office européen des brevets**

(11) **EP 4 657 336 A1**

(12) **EUROPEAN PATENT APPLICATION**
published in accordance with Art. 153(4) EPC

(43) Date of publication:
**03.12.2025  Bulletin 2025/49**

(21) Application number: **23926769.3**

(22) Date of filing: **15.03.2023**

(51) International Patent Classification (IPC):
**G06N 20/00** (2019.01)

(52) Cooperative Patent Classification (CPC):
**G06N 20/00**

(86) International application number:
**PCT/CN2023/081653**

(87) International publication number:
**WO 2024/187413 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **LI, Fangfang**
  **Shenzhen, Guangdong 518129 (CN)**
• **WANG, Fei**
  **Shenzhen, Guangdong 518129 (CN)**
• **PENG, Chenghui**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **MODEL TRAINING METHOD AND COMMUNICATION APPARATUS**

(57)  This application provides a model training method and a communication apparatus, applied to the wireless communication field. The method includes: The method includes: A first device sends a first training data set to a second device. The second device sends first feedback information including a data value of each piece of data in the first training data set to the first device. The first device determines a first data set and a second data set based on the received data value and a first value threshold, and performs model training on a student model based on the first data set and the second data set. Both data in the first data set and data in the second data set belong to the first training data set. In the method, the first device may divide local data into the first data set and the second data set based on the data value and the value threshold, and perform model training based on the two parts of data sets. This helps reduce a data transmission amount without losing accuracy of the student model, to reduce wireless network communication overheads.

FIG. 3

**Description**

**TECHNICAL FIELD**

This application relates to the field of artificial intelligence (artificial intelligence, AI), and in particular, to a model training method and a communication apparatus.

**BACKGROUND**

With the popularization of an AI technology, more AI tasks are expected to appear in a 6th generation (6th generation, 6G) network. Due to limited computing power, a wireless edge device can only use a small model for training. However, there are a large quantity of wireless parameters, and the small model has a limited expression capability. In a knowledge distillation (knowledge distillation) technology, a teacher (teacher) model with a large quantity of parameters is trained, and a student (student) model with a small quantity of parameters is trained by using the teacher model, so that the student model has a capability of the teacher model. The knowledge distillation technology is applied in a wireless network, to assist a device with small computing power in training the student model, to improve model accuracy and a model convergence speed.

During knowledge distillation, the device with small computing power needs to continuously upload full local data (local data). The local data is input into the teacher model, and the teacher model can output a soft label (soft label). The device with small computing power needs to download full soft labels for model distillation. The device with small computing power uploads and downloads a large amount of data, and this requires high wireless transmission bandwidth. How to reduce a data transmission amount without losing accuracy of the student model is an urgent problem to be resolved currently.

**SUMMARY**

This application provides a model training method and a communication apparatus, to reduce a data transmission amount without losing accuracy of a student model.

According to a first aspect, a model training method is provided. The method may be performed by a first device (for example, a terminal), or may be performed by a component (for example, a processor, a chip, or a chip system) of the first device, or may be implemented by a logical module or software that can implement all or some functions of the first device.

The method includes: sending a first training data set to a second device, where the first training data set includes at least one piece of data; receiving first feedback information from the second device, where the first feedback information includes a data value of each piece of data in the first training data set; determining a first data set and a second data set based on the data value of each piece of data in the first training data set and a first value threshold, where both data in the first data set and data in the second data set belong to the first training data set; and performing model training on a student model based on the first data set and the second data set.

According to the model training method provided in this application, a data value and a value threshold (for example, the first value threshold) are introduced, so that the first device can divide local data into two parts (that is, the first data set and the second data set) based on the data value and the value threshold, and perform model training based on the two parts of data. This helps reduce a data transmission amount without losing accuracy of the student model, to reduce wireless network communication overheads.

In a possible implementation, the first feedback information further includes a first soft label, and the first soft label is an output obtained by the second device by using the first training data set as an input of a teacher model; and performing model training on the student model based on the first data set and the second data set includes: performing knowledge distillation on the student model by using the first data set and a soft label corresponding to the first data set in the first soft label, and/or updating the student model by using the second data set, where the first data set is data whose data value is greater than or equal to the first value threshold in the first training data set, the second data set is data whose data value is less than the first value threshold in the first training data set, and the first value threshold is a positive number.

The foregoing knowledge distillation and updating the student model by using the second data set may be performed simultaneously, or one of the two may be performed before the other. If knowledge distillation is first performed, and accuracy of the student model reaches a convergence condition in a knowledge distillation process, the student model may not be updated by using the second data set anymore; otherwise, the student model needs to be updated by using the second data set. Similarly, if the student model is first updated by using the second data set, and accuracy of the student model reaches a convergence condition in this process, knowledge distillation may not be performed anymore; otherwise, knowledge distillation needs to be performed.

Further, performing model training on the student model based on the first data set and the second data set further includes: determining whether accuracy of the student model meets a convergence condition; if the accuracy of the student model does not meet the convergence condition, sending a second training data set to the second device, where the second training data set includes at least one piece of data; receiving second feedback information from the second device, where the second feedback information includes a second soft label and a data value of each piece of data in the second training data set, and the second soft label is an output obtained by the second device by using the second training data set as an input of the teacher model; determining a third data set and a fourth data set based on the data value of each piece of data in the second training data set and a second value threshold, where the third data set is data whose data value is greater than or equal to the second value threshold in the second training data set, the fourth data set is data whose data value is less than the second value threshold in the second training data set, and the second value threshold is a positive number; and performing model training on the student model based on the third data set, the fourth data set, and the second soft label.

If the accuracy of the student model still does not meet the convergence condition after the foregoing knowledge distillation is performed and the student model is updated by using the second data set, the second training data set needs to be sent to the second device and other subsequent operations described above need to be performed.

Performing model training on the student model based on the third data set, the fourth data set, and the second soft label includes: The first device performs knowledge distillation on the student model by using the third data set and a soft label corresponding to the third data set in the second soft label, and/or updates the student model by using the fourth data set.

According to the model training method provided in this application, the first device and the second device jointly perform model training. Knowledge distillation is performed by using data with a high data value in the training data set, and the student model is updated by using data with a low data value, so that a model convergence accuracy requirement can be met by using less data. In comparison with conventional knowledge distillation, data transmission is reduced, so that link resources are saved.

In a possible implementation, performing model training on the student model based on the first data set and the second data set includes: determining a third data set and a fourth data set in a second training data set, where the third data set is data whose similarity to the first data set is greater than or equal to a first similarity threshold in the second training data set, the fourth data set is data whose similarity to the first data set is less than the first similarity threshold in the second training data set, the first similarity threshold is a positive number, and the first data set is data whose data value is greater than or equal to the first value threshold in the first training data set; sending the third data set to the second device; receiving a second soft label from the second device, where the second soft label is an output obtained by the second device by using the third data set as an input of a teacher model; and performing knowledge distillation on the student model by using the third data set and the second soft label, and/or updating the student model by using the fourth data set.

The foregoing knowledge distillation and updating the student model by using the fourth data set may be performed simultaneously, or one of the two may be performed before the other. If knowledge distillation is first performed, and accuracy of the student model reaches a convergence condition in a knowledge distillation process, the student model may not be updated by using the fourth data set anymore; otherwise, the student model needs to be updated by using the fourth data set. Similarly, if the student model is first updated by using the fourth data set, and accuracy of the student model reaches a convergence condition in this process, knowledge distillation may not be performed anymore; otherwise, knowledge distillation needs to be performed.

Further, performing model training on the student model based on the first data set and the second data set further includes: determining whether accuracy of the student model meets a convergence condition; if the accuracy of the student model does not meet the convergence condition, determining a fifth data set and a sixth data set in a third training data set, where the fifth data set is data whose similarity to a seventh data set is greater than or equal to a second similarity threshold in the third training data set, the sixth data set is data whose similarity to the seventh data set is less than the second similarity threshold in the third training data set, the second similarity threshold is a positive number, and the seventh data set includes data in the first data set and data in the third data set; sending the fifth data set to the second device; receiving a third soft label from the second device, where the third soft label is an output obtained by the second device by using the fifth data set as an input of the teacher model; and performing knowledge distillation on the student model by using the fifth data set and the third soft label, and/or updating the student model by using the sixth data set.

If the accuracy of the student model still does not meet the convergence condition after the foregoing knowledge distillation is performed and the student model is updated by using the fourth data set, the first device further needs to determine the fifth data set and the sixth data set in the third training data set, and perform subsequent operations described above.

According to the model training method provided in this application, the first device and the second device jointly perform model training. A similarity is introduced to extract and transmit data whose similarity to data with a high data value is high in a data set, knowledge distillation is performed by using the data whose similarity to the data with a high data value is high in the data set, and the student model is updated by using data whose similarity to the data with a high data value is low in the data set, so that a model convergence accuracy requirement can be met by using less data. In comparison with conventional knowledge distillation, data transmission is reduced, so that link resources are saved.

In a possible implementation, before determining the first data set and the second data set based on the data value of each piece of data in the first training data set and the first value threshold, the method further includes: receiving the first value threshold from the second device.

In a possible implementation, before determining the third data set and the fourth data set based on the data value of each piece of data in the second training data set and the second value threshold, the method further includes: receiving the second value threshold from the second device.

In a possible implementation, both the first value threshold and the second value threshold are positively correlated to currently available computing power of the first device.

For example, the second device may determine the first value threshold and the second value threshold based on the currently available computing power of the first device and currently available computing power of the second device.

For example, data values of all pieces of data in the first training data set may be sorted in ascending order, and the first value threshold may be a $(k*n)^{th}$ percentile in sorted data values. k=currently available computing power of the first device/currently available computing power of the second device. Alternatively, the second value threshold may be calculated in a similar manner.

Because computing power of the second device is abundant compared with that of the first device, the second device calculates and configures the value threshold for the first device. Compared with calculating the value threshold by the first device, this does not increase load of the first device. In addition, the available computing power/a transmission rate of the first device may continuously change, and the value threshold may be dynamically calculated and configured based on current computing power to adapt to a scenario in which the computing power/the transmission rate of the first device changes.

In a possible implementation, before determining the third data set and the fourth data set in the second training data set, the method further includes: receiving the first similarity threshold and/or a similarity calculation manner from the second device, where the similarity calculation manner is used to calculate a similarity between any piece of data in the second training data set and the first data set.

In a possible implementation, before determining the fifth data set and the sixth data set in the third training data set, the method further includes: receiving the second similarity threshold from the second device.

In an example, the second device may determine the first similarity threshold and the second similarity threshold based on the currently available computing power of the first device and maximum available computing power of the first device. For example, similarity threshold=(maximum available computing power-currently available computing power)/-maximum available computing power.

Because computing power of the second device is abundant compared with that of the first device, the second device configures the similarity threshold for the first device. Compared with calculating the similarity threshold by the first device, this does not increase load of the first device. In addition, the available computing power/a transmission rate of the first device may continuously change, and can adapt to a scenario in which the computing power/the transmission rate of the first device changes via dynamic similarity threshold.

In a possible implementation, before sending the first training data set to the second device, the method further includes: sending collaboration request information to the second device, where the collaboration request information includes a collaboration pattern and an identifier of a collaboration model, the collaboration pattern is knowledge distillation, and the identifier of the collaboration model is an identifier of the teacher model.

The second device may send one or more of the following to the first device based on the collaboration request information: a value threshold (for example, the first value threshold or the second value threshold), a similarity threshold (for example, the first similarity threshold or the second similarity threshold), and the similarity calculation manner.

According to a second aspect, a model training method is provided. The method may be performed by a second device (for example, a network device), or may be performed by a component (for example, a processor, a chip, or a chip system) of the second device, or may be implemented by a logical module or software that can implement all or some functions of the second device.

The method includes: receiving at least one piece of data from a first device; determining a data value of each of the at least one piece of data; and sending first feedback information to the first device, where the first feedback information includes the data value of each of the at least one piece of data, and the data value of each of the at least one piece of data is used by the first device to determine data used for knowledge distillation and data used for student model update.

It should be understood that the at least one piece of data may be the first training data set, the second training data set, the third data set, or the like in the first aspect.

According to the model training method provided in this application, a data value and a value threshold (for example, the first value threshold) are introduced, so that the first device can divide local data into two parts (that is, the first data set and the second data set) based on the data value and the value threshold, and perform model training based on the two parts of data. This helps reduce a data transmission amount without losing accuracy of the student model, to reduce wireless network communication overheads.

In a possible implementation, the first feedback information further includes a soft label, and before sending the feedback information to the first device, the method further includes: inputting the at least one piece of data into a teacher model, to obtain the soft label output by the teacher model, where the soft label is used by the first device to perform the knowledge distillation.

In a possible implementation, the method further includes: sending a value threshold to the first device, where the value threshold is used by the first device to determine, based on the data value of the data, the data used for the knowledge distillation and the data used for the student model update.

It should be understood that the value threshold may be, for example, the first value threshold or the second value threshold in the first aspect.

In a possible implementation, the method further includes: sending a similarity threshold and/or a similarity calculation manner to the first device, where the similarity calculation manner is used to calculate a data similarity, and the similarity threshold is used by the first device to determine, based on the data similarity, the data used for the knowledge distillation and the data used for the student model update.

For specific implementations and technical effects of the corresponding solutions in the second aspect, refer to the descriptions in the first aspect.

According to a third aspect, a communication apparatus is provided and includes a module or unit configured to perform the method in any one of the first aspect or the possible implementations of the first aspect.

According to a fourth aspect, a communication apparatus is provided and includes a module or unit configured to perform the method in any one of the second aspect or the possible implementations of the second aspect.

According to a fifth aspect, a communication apparatus is provided and includes a processor. The processor is coupled to a memory, the memory is configured to store a computer program or instructions, and the processor is configured to execute the computer program or the instructions stored in the memory, to implement the method in any one of the first aspect or the possible implementations of the first aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

In an implementation, the apparatus is a first device. For example, the communication interface may be a transceiver or an input/output interface.

In another implementation, the apparatus is a chip in the first device. For example, the communication interface may be an input/output interface.

According to a sixth aspect, a communication apparatus is provided and includes a processor. The processor is coupled to a memory, the memory is configured to store a computer program or instructions, and the processor is configured to execute the computer program or the instructions stored in the memory, to implement the method in any one of the second aspect or the possible implementations of the second aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

In an implementation, the apparatus is a second device. For example, the communication interface may be a transceiver or an input/output interface.

In another implementation, the apparatus is a chip in the second device. For example, the communication interface may be an input/output interface.

According to a seventh aspect, a processor is provided, including an input circuit, an output circuit, and a processing circuit. The processing circuit is configured to: receive a signal via the input circuit, and transmit the signal via the output circuit, to enable the processor to perform the method in any one of the foregoing aspects or any one of the possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to an eighth aspect, a communication system is provided, including at least one of the communication apparatus provided in the third aspect and the communication apparatus provided in the fourth aspect, or including at least one of the communication apparatus provided in the fifth aspect and the communication apparatus provided in the sixth aspect.

According to a ninth aspect, a computer program product is provided. The computer program product includes a computer program (which may also be referred to as code or instructions). When the computer program is run, a computer is enabled to perform the method in any one of the foregoing aspects or any one of the possible implementations of any one of the foregoing aspects.

According to a tenth aspect, a computer-readable storage medium is provided. The computer-readable storage medium stores a computer program (which may also be referred to as code or instructions). When the computer program is run on a computer, the computer is enabled to perform the method in any one of the foregoing aspects or any one of the possible implementations of any one of the foregoing aspects.

According to an eleventh aspect, a chip is provided, and includes a processor configured to invoke a computer program from a memory and run the computer program, to enable a communication apparatus on which the chip is installed to perform the method in any one of the foregoing aspects or any one of the possible implementations of any one of the foregoing aspects.

According to a twelfth aspect, a communication apparatus is provided. The communication apparatus includes an interface and a processor. The interface is configured to send and/or receive a signal, to enable the processor to perform the method in any one of the foregoing aspects or any one of the possible implementations of any one of the foregoing aspects.

## BRIEF DESCRIPTION OF DRAWINGS

FIG. 1 is a schematic flowchart of conventional knowledge distillation;
FIG. 2 is a diagram of a communication system according to an embodiment of this application;
FIG. 3 is a schematic flowchart of a model training method according to an embodiment of this application;
FIG. 4 is a schematic flowchart of training a loss prediction model according to this application;
FIG. 5 is a schematic flowchart of a model training method according to an embodiment of this application;
FIG. 6 is a diagram of performing knowledge distillation on a student model and updating the student model according to this application;
FIG. 7 is a schematic flowchart of a model training method according to an embodiment of this application;
FIG. 8 is a diagram of relationships between a quantity of samples and accuracy obtained through model training by using a method provided in this application and conventional knowledge distillation;
FIG. 9 is a schematic flowchart of a model training method according to an embodiment of this application;
FIG. 10 is a diagram of calculating a data similarity according to this application;
FIG. 11 is a diagram of performing knowledge distillation on a student model and updating the student model according to this application;
FIG. 12 is a schematic flowchart of a model training method according to an embodiment of this application;
FIG. 13 is a diagram of relationships between a quantity of samples and accuracy obtained through model training by using a method provided in this application and conventional knowledge distillation;
FIG. 14 is a block diagram of a communication apparatus according to an embodiment of this application;
FIG. 15 is a block diagram of another communication apparatus according to an embodiment of this application;
FIG. 16 is a diagram of a structure of a terminal according to an embodiment of this application; and
FIG. 17 is a diagram of a structure of a network device according to an embodiment of this application.

## DESCRIPTION OF EMBODIMENTS

The following describes the technical solutions in embodiments of this application with reference to the accompanying drawings in embodiments of this application.

In the descriptions of this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that in this application, descriptions similar to "in a case of...", "if...", "when...", "it is assumed that...", and the like may be used interchangeably.

With the popularization of an AI technology, more AI tasks are expected to appear in a 6G generation network. Due to limited computing power, a wireless edge device can only use a small model for training. However, there are a large quantity of wireless parameters, and the small model has a limited expression capability. In addition, many researches in the industry show that a higher model accuracy can be achieved by first training a large model with high accuracy and then compressing the large model to great extent to obtain a small model than initially training a small model on a data set.

Knowledge distillation (knowledge distillation) is a model compression technology in which a teacher (teacher) model with a large quantity of parameters is trained, and a student (student) model with a small quantity of parameters is trained by using the teacher model, so that the student model has a capability of the teacher model. It is expected that a pre-training model (that is, a teacher model) designed for a wireless network is deployed in the network as a pre-training basis for various wireless AI tasks in the future. In the wireless network, a device with small computing power with limited resources may make full use of knowledge of a pre-trained large model to assist in training a small model (that is, a student model) of the device, to improve model accuracy and a model convergence speed.

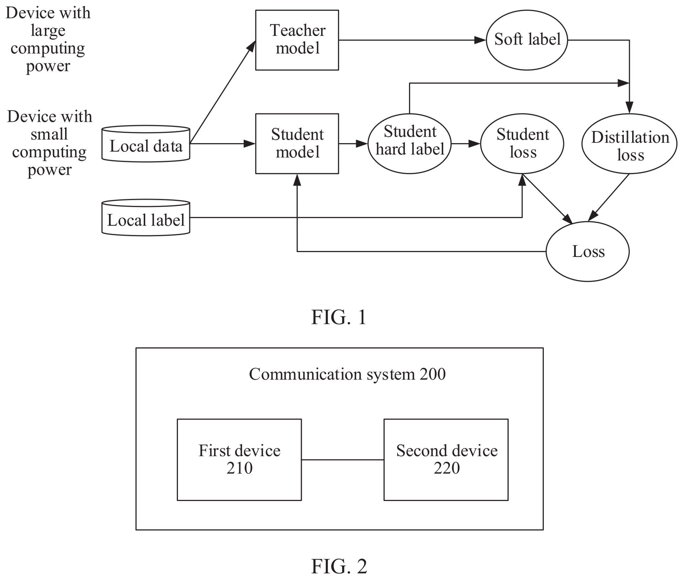

FIG. 1 is a schematic flowchart of conventional knowledge distillation. Refer to FIG. 1. One teacher model is deployed on a device with large computing power. The teacher model cannot be directly run on a device with small computing power due to limited resources. One student model is deployed on the device with small computing power. The student model may be customized on demand based on a local resource. The device with large computing power is a device that has more resources (for example, computing resources) than the device with small computing power. For example, the device with small computing power may be a terminal, and the device with large computing power may be a network device, a core network device, an edge data center, a general-purpose computer, or the like. For another example, the device with small computing power may be a base station, and the device with large computing power may be a core network device, an edge data center, a general-purpose computer, or the like.

The knowledge distillation mainly includes the following steps.

(1) The device with small computing power generates data online and uploads the generated local data (local data) to the device with large computing power.
(2) The device with large computing power uses the teacher model to calculate an output of the local data, that is, a soft label (soft label).
(3) The device with small computing power downloads the soft label.
(4) The device with small computing power uses the student model to calculate an output of the local data, that is, a hard label (hard label).
(5) The device with small computing power calculates a loss (loss) L of the student model, and updates a parameter of the student model by using the loss L of the student model.

For example, $L=aL_{soft}+bL_{hard}$. a is a weight of $L_{soft}$, and b is a weight of $L_{hard}$.

$L_{soft}$ is a student loss (student loss), and can be obtained based on a local label (local label) and the student hard label (student hard label). For example, $L_{soft}$=student hard label-local label.

In this application, the local label may also be referred to as an original label, a ground truth (ground truth) label, a ground truth, or a hard target (hard target). The student hard label is the output of the student model, and may also be referred to as the hard label.

$L_{hard}$ is a distillation loss (distill loss), and can be obtained based on the soft label and the student hard label. For example, $L_{hard}$=soft label-student hard label. It should be understood that the soft label is the output of the teacher model.

(6) Repeat step (1) to step (5) until the student model meets an accuracy requirement.

In the foregoing model training process, the device with small computing power needs to continuously upload full local data and download full soft labels. A large amount of data needs to be uploaded and downloaded, and this requires high wireless transmission bandwidth. How to reduce a data transmission amount without losing accuracy of the student model is an urgent problem to be resolved currently.

In view of this, this application provides a model training method. A data value and a value threshold are introduced, so that a device with small computing power (that is, a first device in this application) can divide local data into two parts based on the data value and the value threshold, and perform model training based on the two parts of data. This helps reduce a data transmission amount without losing accuracy of the student model, to reduce wireless network communication overheads.

This application may be applied to a long term evolution (long term evolution, LTE) system, a 5th generation (5th Generation, 5G) mobile communication system, a new radio (New Radio, NR) system, a 6G communication system, a future evolved communication system, another communication system, or the like. This is not limited in this application. This application is also applicable to an internet technology (internet technology, IT) system.

FIG. 2 is a diagram of a communication system to which this application is applicable. As shown in FIG. 2, the communication system 200 may include a first device 210 and a second device 220. A student model is deployed on the first device 210, and a trained teacher model (a teacher model for short in this specification) is deployed on the second device. It should be understood that the communication system shown in FIG. 2 may further include more nodes, and the nodes are not shown one by one in the figure in this embodiment of this application.

For example, the first device may be a terminal, and the second device may be a network device, a core network device, an edge data center, a general-purpose computer, or the like. Alternatively, the first device may be a network device, and the second device may be a core network device, an edge data center, a general-purpose computer, or the like. Alternatively, the first device may be a terminal, and the second device may be a core network device, an edge data center, a general-purpose computer, or the like.

For example, available computing power of the first device 210 is less than that of the second device 220.

For example, a quantity of floating-point operations per second (floating-point operations per second, FLOPS) performed by a central processing unit (central processing unit, CPU) of a device may be used to represent computing power of the device. FLOPS=quantity of CPU cores * dominant frequency of a single core * floating-point calculation value of a single CPU periodicity *1000000. For example, the available computing power of the first device 210 is 100 GFLOPS (G=10^9), and the currently available computing power of the second device 220 is 1000 GFLOPS.

The terminal in embodiments of this application may be user equipment (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a large screen a vehicle-mounted device, a wearable device, a terminal in a 5G network, a terminal in a future evolved public land mobile network (public land mobile network, PLMN), or the like. This is not limited in embodiments of this application.

The network device in embodiments of this application may be a device configured to communicate with the terminal. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access point (access point, AP) in a Wi-Fi system. For another example, the network device may alternatively be a module or unit that completes a part of functions of a base station, for example, may be a central unit (central unit, CU) or a distributed unit (distributed unit, DU). For still another example, the network device may alternatively be a radio controller in a cloud radio access network (cloud radio access network, CRAN) scenario, a relay station, an access point, a vehicle-mounted device, a wearable device, or an access network device in another future evolved communication system. A specific technology and a specific device form that are used by the network device are not limited in this application.

The core network device in this application may provide a user connection, manage a user, and complete a service bearer, and serve as a bearer network to provide an interface for connecting to an external network. For example, the core network device may be a session management function (session management function, SMF).

In embodiments of this application, the first device or the second device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the first device or the second device, or a functional module that can invoke and execute the program in the first device or the second device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

The following describes in detail the methods provided in this application with reference to the accompanying drawings. It may be understood that, in some accompanying drawings provided in this application, an example in which the first device and/or the second device are/is mainly used as an execution body is used to describe the methods. However, the execution body is not limited in this application. For example, the first device or the second device in the accompanying drawings may alternatively be a chip, a chip system, or a processor that supports the device in implementing the method, or may be a logical module or software that can implement all or some functions of the device.

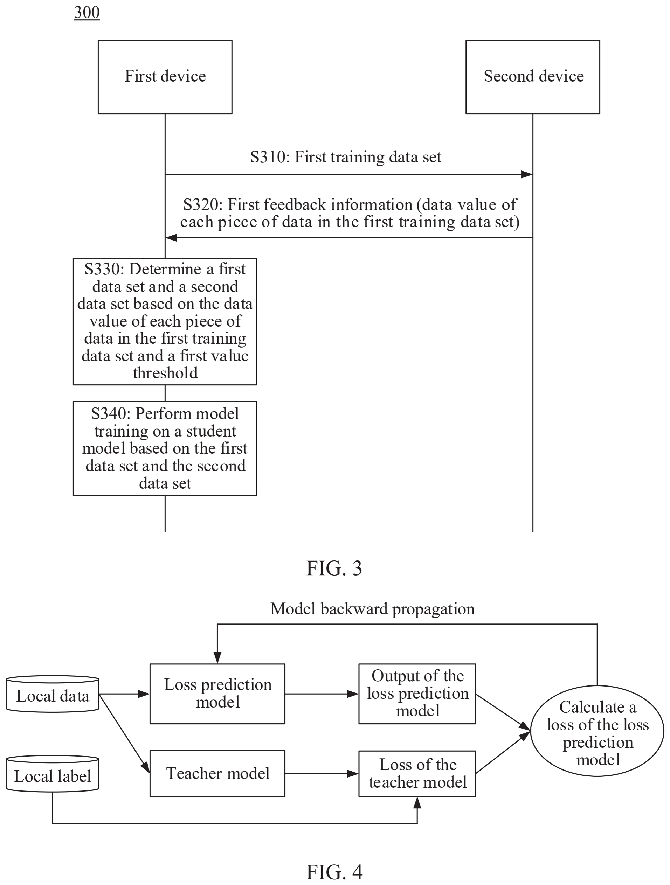

FIG. 3 is a schematic flowchart of a model training method according to this application. The method 300 may include S310 to S340. The following describes the steps.

S310: A first device sends a first training data set to a second device. Correspondingly, the second device receives the first training data set.

The first training data set includes at least one piece of data. For example, for picture data, one piece of data may indicate at least one picture, in other words, one piece of data may include data of at least one picture. For another example, for video data, one piece of data may include video data of one time slice (that is, a period of time, for example, 5 seconds).

It should be understood that the first training data set may include data generated by the first device locally, or may include data obtained by the first device from another device.

S320: The second device sends first feedback information to the first device. Correspondingly, the first device receives the first feedback information. The first feedback information includes a data value of each piece of data in the first training data set.

It may be understood that, except for a special reason, for example, a program exception or a calculation error, data values of some data may be null. Usually, the first feedback information includes the data value of each piece of data.

Specifically, after receiving the first training data set sent by the first device, the second device may calculate the data value of each piece of data in the first training data set, and then return the calculated data value of each piece of data in the first training data set to the first device.

Optionally, the first feedback information may further include a first soft label.

Specifically, after receiving the first training data set, the second device may further input the first training data set into a teacher model, and the teacher model outputs the first soft label.

In a possible implementation, a data value of any piece of data meets the following formula (1):

$$ DV = -\sum_{i=1}^{i=N} \left[ r_i * \log_e \left( p_i \right) \right] \quad (1) $$

DV is the data value of the data; $r_i$ is a ground truth label of the data, that is, a true label of the data; and $p_i$ is an output corresponding to the data used as an input of the teacher model, and represents a probability that the data belongs to an $i^{th}$ category in N categories.

The above manner is to calculate the data value by using uncertainty (Uncertainty) of the category. Smaller uncertainty of data indicates a greater data value of the data and more knowledge contained in a corresponding soft label output by the teacher model.

It should be understood that when the data value of any piece of data in the first training data set is calculated by using the formula (1), $p_i$ is a soft label corresponding to the data in the first soft label.

An example in which any piece of data in the first training data set is one handwritten digit picture is used for description. It is assumed that a hard target corresponding to the data is a category 8 of picture classification, that is, $r_1$ to $r_{10}$ are sequentially 0, 0, 0, 0, 0, 0, 0, 1, 0, and 0, and $p_1$ to $p_{10}$ are sequentially 0.01, 0.02, 0.04, 0.03, 0.06, 0.07, 0.03, 0.67, 0.05 and 0.02. Then $DV = 0.4005$ .

In another possible implementation, the first device may use any piece of data as an input of a loss prediction model, to obtain a data value of the data output by the loss prediction model. The loss prediction model is obtained through knowledge distillation.

For example, the loss prediction model may be trained by using a method shown in FIG. 4. Refer to FIG. 4. A first device may input a training data set (for example, a first training data set or a second training data set) into the loss prediction model and a teacher model, calculate a loss of the loss prediction model by using a loss of the teacher model and an output of the loss prediction model, and update a parameter of the loss prediction model based on the loss of the loss prediction model. The loss of the teacher model is equal to a difference between an output of the teacher model and a label of the training data set (that is, a ground truth value of the training data set). The loss of the loss prediction model is a weighted sum of the output of the loss prediction model and the loss of the teacher model. For example, a sum of an output weight of the loss prediction model and a loss weight of the teacher model may be 1.

It should be understood that the teacher model shown in FIG. 4 is different from a teacher model deployed on the second device. For example, the teacher model shown in FIG. 4 is a subset of the teacher model deployed on the second device. For example, a model obtained by removing a last layer (layer) from the teacher model on the second device is the teacher model shown in FIG. 4.

After the loss prediction model is trained, any piece of data of the first device may be input into the loss prediction model, and the loss prediction model outputs a data value of the data.

S330: The first device determines a first data set and a second data set based on the data value of each piece of data in the first training data set and a first value threshold. Both data in the first data set and data in the second data set belong to the first training data set.

In an example, the first value threshold is a positive number. The first data set is data whose data value is greater than or equal to the first value threshold in the first training data set, and the second data set is data whose data value is less than the first value threshold in the first training data set.

In another example, the first value threshold is a negative number. The first data set is data whose data value is greater than or equal to an absolute value of the first value threshold in the first training data set, and the second data set is data whose data value is less than the absolute value of the first value threshold in the first training data set.

In a possible implementation, the first value threshold may be sent by the second device to the first device.

For example, the second device may send the first value threshold to the first device before S310 or S330. For another example, the first feedback information may include the first value threshold.

In an example, the second device may determine the first value threshold based on currently available computing power of the first device and currently available computing power of the second device.

For example, data values of all pieces of data in the first training data set may be sorted in ascending order, and the first value threshold may be a $(k*n)^{th}$ data value in sorted n data values. k=currently available computing power of the first device/currently available computing power of the second device, and n is a quantity of data pieces included in the first training data set. For example, if the currently available computing power of the first device is 100 GFLOPS, and the currently available computing power of the second device is 1000 GFLOPS, k=0.1. In addition, if the first training data set includes 20 pieces of data, that is, n=20, the first value threshold is a $2^{nd}$ data value in sorted 20 data values. For example, if the sorted data values are 0.1, 0.2, 0.4, ..., and the like, the first value threshold may be 0.2.

The currently available computing power of the first device may be sent by the first device to the second device, or may be configured by an operation administration and maintenance (operation administration and maintenance, OAM) for the second device, or may be obtained by the second device from another device.

Optionally, the first value threshold may alternatively be preconfigured on the first device; or the first value threshold may be sent by another device to the first device; or the second device may send a calculation manner of a value threshold and related information (for example, the currently available computing power of the second device) to the first device, and the first device calculates the first value threshold based on the calculation manner of the value threshold and the related information. How the first device obtains the first value threshold is not limited in this application.

S340: The first device performs model training on a student model based on the first data set and the second data set.

According to the model training method provided in this application, a data value and a value threshold (for example, the first value threshold) are introduced, so that the first device can divide local data into two parts (that is, the first data set and the second data set) based on the data value and the value threshold, and perform model training based on the two parts of data. This helps reduce a data transmission amount without losing accuracy of the student model, to reduce wireless network communication overheads.

The following describes two implementations of S340. It should be noted that, in solutions described below, it is assumed that the first value threshold is a positive number.

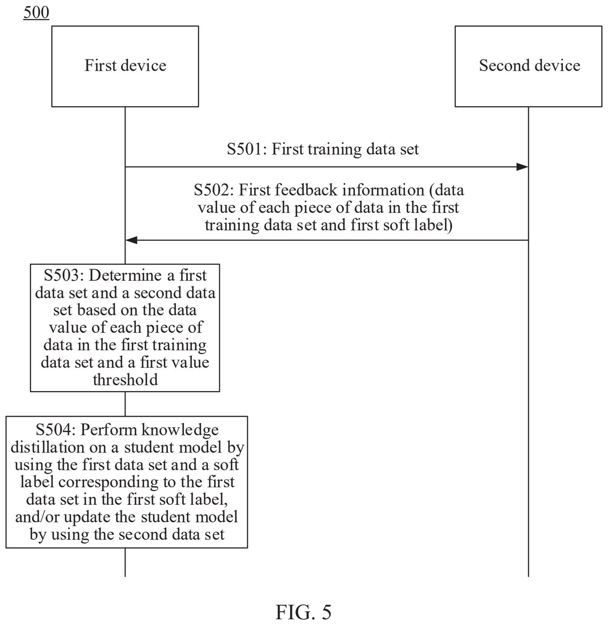

First, with reference to a method 500 shown in FIG. 5, a first implementation of S340 is described. For the first implementation of S340, refer to S504 in the method 500.

For example, FIG. 5 is a schematic flowchart of a model training method according to this application. The method 500 may include S501 to S504.

S501: A first device sends a first training data set to a second device. Correspondingly, the second device receives the first training data set.

This step is the same as S310. Refer to S310.

S502: The second device sends first feedback information to the first device. Correspondingly, the first device receives the first feedback information.

The first feedback information includes a data value of each piece of data in the first training data set and a first soft label. For how to calculate the data value of the data and how to obtain the first soft label, refer to related descriptions of step S320.

S503: The first device determines a first data set and a second data set based on the data value of each piece of data in the first training data set and a first value threshold.

The first data set is data whose data value is greater than or equal to the first value threshold in the first training data set, and the second data set is data whose data value is less than the first value threshold in the first training data set.

It should be understood that, for step S503, refer to related descriptions of S330.

S504: The first device performs knowledge distillation on a student model by using the first data set and a soft label corresponding to the first data set in the first soft label, and/or updates the student model by using the second data set.

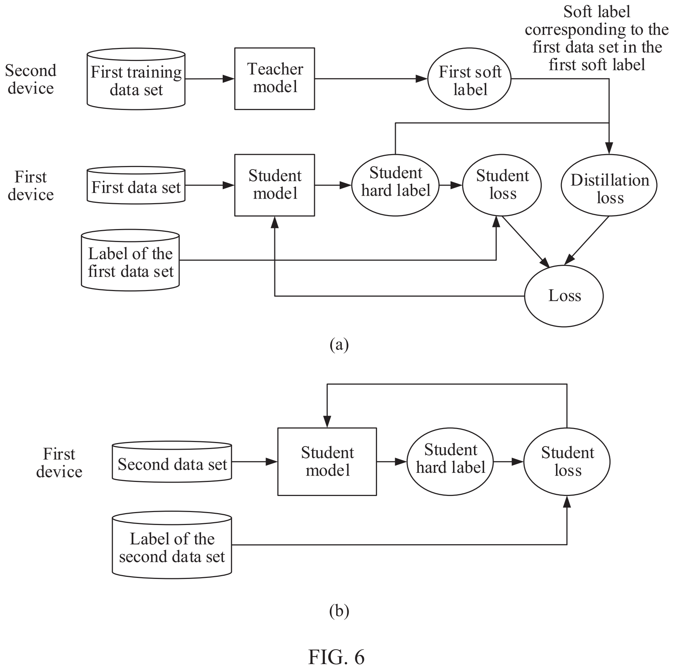

S504 is described with reference to FIG. 6.

(a) in FIG. 6 shows a process in which the first device performs knowledge distillation on the student model by using the first data set and the soft label corresponding to the first data set in the first soft label. Refer to (a) in FIG. 6. After obtaining the first data set based on the first value threshold, the first device inputs the first data set into the student model, and the student model outputs a student hard label. Then, the first device may obtain a distillation loss based on the soft label corresponding to the first data set in the first soft label and the student hard label, and may obtain a student loss based on the student hard label and a hard target corresponding to the first data set (that is, a label of the first data set). The first device calculates a loss of the student model based on the distillation loss and the student loss, and updates a parameter of the student model based on the loss.

(b) in FIG. 6 shows a process in which the first device updates the student model by using the second data set. Refer to (b) in FIG. 6. After obtaining the second data set based on the first value threshold, the first device inputs the second data set into the student model, and the student model outputs a student hard label. Then, the first device may obtain a student loss based on the student hard label and a hard target corresponding to the second data set (that is, a label of the second data set), and the first device may update a parameter of the student model based on the student loss.

It should be understood that, for meanings and calculation manners of various labels and various losses in FIG. 6, refer to the foregoing related descriptions of FIG. 1. Details are not described herein again.

The foregoing knowledge distillation and updating the student model by using the second data set may be performed simultaneously, or one of the two may be performed before the other. If knowledge distillation is first performed, and accuracy of the student model reaches a convergence condition in a knowledge distillation process, the student model may not be updated by using the second data set anymore; otherwise, the student model needs to be updated by using the second data set. Similarly, if the student model is first updated by using the second data set, and accuracy of the student model reaches a convergence condition in this process, knowledge distillation may not be performed anymore; otherwise, knowledge distillation needs to be performed.

If the accuracy of the student model still does not meet the convergence condition after the foregoing knowledge distillation is performed and the student model is updated by using the second data set, the first device may further update a training data set, and then repeat steps S501 to S504. It should be understood that, in this case, a training data set in S501 to S504 is no longer the first training data set, but an updated training data set, which may be referred to as, for example, a second training data set.

Specifically, if the accuracy of the student model does not meet the convergence condition, the first device sends the second training data set to the second device, where the second training data set includes at least one piece of data. Then, the second device may input the second training data set into a teacher model, to obtain a soft label (denoted as a second soft label) output by the teacher model. In addition, the second device may calculate a data value of each piece of data in the second training data set. Then, the second device may send second feedback information to the first device, where the second feedback information includes the second soft label and the data value of each piece of data in the second training data set. After receiving the second feedback information, the first device may determine a third data set and a fourth data set based on the data value of each piece of data in the second training data set and a second value threshold. Then, the second device may perform model training on the student model based on the third data set, the fourth data set, and the second soft label.

Both the third data set and the fourth data set belong to the second training data set. Further, if the second value threshold is a positive number, the third data set is data whose data value is greater than or equal to the second value threshold in the second training data set, and the fourth data set is data whose data value is less than the second value threshold in the second training data set. If the second value threshold is a negative number, the third data set is data whose data value is greater than or equal to an absolute value of the second value threshold in the second training data set, and the fourth data set is data whose data value is less than the absolute value of the second value threshold in the second training data set.

The second value threshold may be the foregoing first value threshold. Alternatively, the second value threshold is a value threshold dynamically configured by the second device for the first device.

In an example, similar to a manner of determining the first value threshold, the second value threshold may be determined based on currently available computing power of the first device. It should be understood that, if the second device determines the second value threshold, compared with available computing power of the first device when the second device determines the first value threshold, the available computing power of the first device may change when the second device determines the second value threshold. Therefore, the determined second value threshold may be different from the first value threshold.

Similar to the first value threshold, the second value threshold may be sent by another device to the first device; or the second device may send related information (for example, currently available computing power of the second device) to the first device, and the first device calculates the second value threshold based on a calculation manner of the value threshold and the related information that are previously sent by the second device.

It is assumed that the second value threshold is a positive number. Performing model training on the student model based on the third data set, the fourth data set, and the second soft label may be specifically: The first device performs knowledge distillation on the student model by using the third data set and a soft label corresponding to the third data set in the second soft label, and/or updates the student model by using the fourth data set.

That the first device performs knowledge distillation on the student model by using the third data set and the soft label corresponding to the third data set in the second soft label is similar to that the first device performs knowledge distillation on the student model by using the first data set and the soft label corresponding to the first data set in the first soft label described in S504. For details, refer to the foregoing related descriptions. Details are not described herein again. Similarly, that the first device updates the student model by using the fourth data set is similar to that the first device updates the student model by using the second data set. For details, refer to the foregoing related descriptions. Details are not described herein again.

According to the model training method provided in this application, the first device and the second device jointly perform model training. Knowledge distillation is performed by using data with a high data value in the training data set, and the student model is updated by using data with a low data value, so that a model convergence accuracy requirement can be met by using less data. In comparison with conventional knowledge distillation, data transmission is reduced, so that link resources are saved.

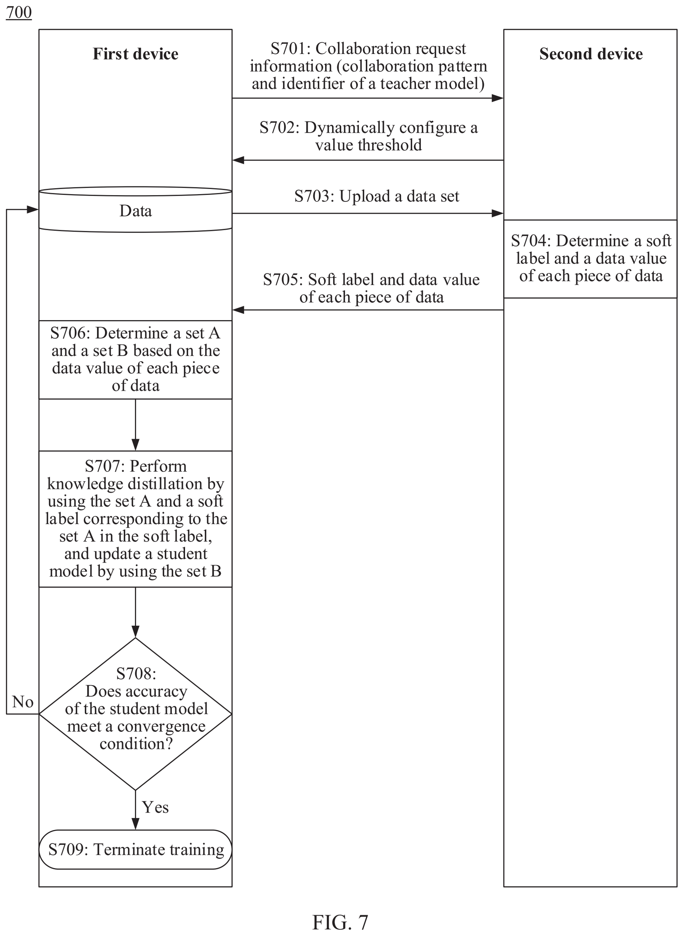

To make a person skilled in the art better understand this application, refer to FIG. 7. This application further provides a complete flowchart of model training in the foregoing first implementation.

For example, FIG. 7 is a schematic flowchart of a model training method according to this application. In the method 700, the first implementation is used in a process of training a student model. The method 700 may include S701 to S709. The following describes the steps.

S701: A first device sends collaboration request information to a second device. Correspondingly, the second device receives the collaboration request information.

The collaboration request information includes a collaboration pattern (Pattern) and an identifier of a collaboration model. The collaboration pattern is knowledge distillation, and the identifier of the collaboration model is an identifier of a teacher model.

S702: The second device dynamically configures a value threshold.

The second device may sense computing power of the first device, then calculate a value threshold of data based on currently available computing power of the current first device, and dynamically configure the value threshold for the first device. It should be understood that, when the value threshold is dynamically configured, if the currently available computing power of the first device is large, a value of the value threshold is small; otherwise, a value of the value threshold is large.

Because computing power of the second device is abundant compared with that of the first device, the second device calculates and configures the value threshold for the first device. Compared with calculating the value threshold by the first device, this does not increase load of the first device. In addition, the available computing power/a transmission rate of the first device may continuously change, and the value threshold may be dynamically calculated and configured to adapt to a scenario in which the computing power/the transmission rate of the first device changes.

In an alternative manner of S702, the value threshold may be configured only once, that is, the value threshold is not dynamically configured, but the value threshold is set to a fixed value in a complete training process.

It should be understood that dynamically configured value thresholds in S702 may be sequentially: a first value threshold, a second value threshold, ..., and the like.

S703: The first device continuously generates a data stream online and/or continuously receives a data stream from another device online, and uploads a data set to the second device at intervals of a time period (a fixed time periodicity or when a quantity of data pieces reaches a threshold). It should be understood that a data set uploaded by the first device each time includes at least one piece of data.

It should be understood that data sets sent by the first device to the second device may be sequentially: a first training data set, a second training data set, ..., and the like.

It should be further understood that a data set (for example, the first training data set or the second training data set) sent by the first device to the second device each time may not include same data. However, this application does not exclude a case in which data sets sent twice consecutively include some or all same data.

S704: After receiving the data set, the second device obtains, through calculation by using forward propagation of the teacher model, a soft label corresponding to each piece of data, and the second device calculates a data value of each piece of data.

For how to calculate the data value of the data, refer to the foregoing related content. Details are not described herein again.

It should be understood that soft labels obtained by the second device through calculation may be sequentially: a first soft label, a second soft label, ..., and the like.

S705: The second device sends the soft label and the data value to the first device. Correspondingly, the first device receives the soft label and the data value.

S706: The first device determines a set A and a set B based on the data value and the value threshold.

Specifically, the first device divides, based on the data value and the value threshold that are sent by the second device, the data set uploaded to the second device in step S703 into the set A and the set B. Assuming that the value threshold is an integer, the set A is data whose value is greater than or equal to the value threshold in the data set uploaded to the second device in step S703, and the set B is data whose value is less than the value threshold in the data set uploaded to the second device in step S703.

It should be understood that if the first training data set is uploaded in step S703, the set A is a first data set, and the set B is a second data set. If the second training data set is uploaded in step S703, the set A is a third data set, and the set B is a fourth data set.

S707: Perform knowledge distillation by using the set A and a soft label corresponding to the set A in the soft label, and update the student model by using the set B.

For this step, refer to the foregoing description of S504. Details are not described herein again.

S708: The first device determines whether accuracy of the student model meets a convergence condition.

If the accuracy of the student model does not meet the convergence condition, S703 to S708 are repeatedly performed; otherwise, S709 is performed, that is, training is terminated.

S709: Terminate training.

According to the model training method provided in this application, the first device and the second device jointly perform model training. Knowledge distillation is performed by using data with a high data value in the training data set, and the student model is updated by using data with a low data value, so that a model convergence accuracy requirement can be met by using less data. In comparison with conventional knowledge distillation, data transmission is reduced, so that link resources are saved.

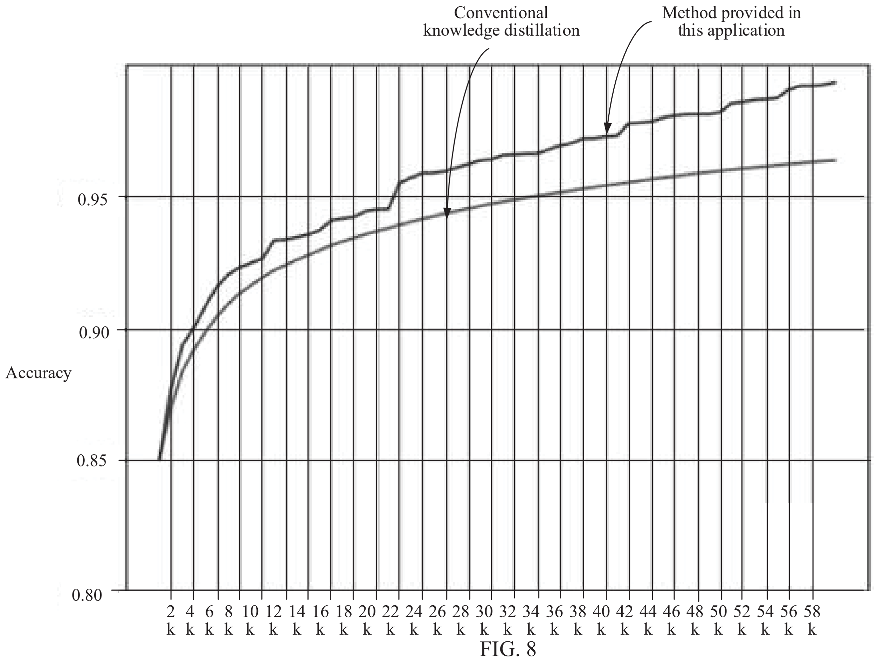

FIG. 8 is a diagram of relationships between a quantity of samples and accuracy obtained through model training by using a method (which may be specifically the method 500 or the method 700) provided in this application and conventional knowledge distillation. Fashion-mnist is used for the data set, a quantity of parameters of the teacher model is 407,050, a quantity of parameters of the student model is 50,890, each sample is trained for 30 epochs (epochs), and target accuracy is 0.95. Refer to FIG. 8. 34k samples are needed to achieve the target accuracy by using conventional knowledge distillation, and only 22k samples are needed to achieve the target accuracy by using the method provided in this application. Efficiency is improved by 35%. A simulation result shows that, in comparison with conventional knowledge distillation, in the method provided in this application, the model convergence accuracy requirement can be met by using less data. In comparison with conventional knowledge distillation, data transmission is reduced, so that link resources are saved.

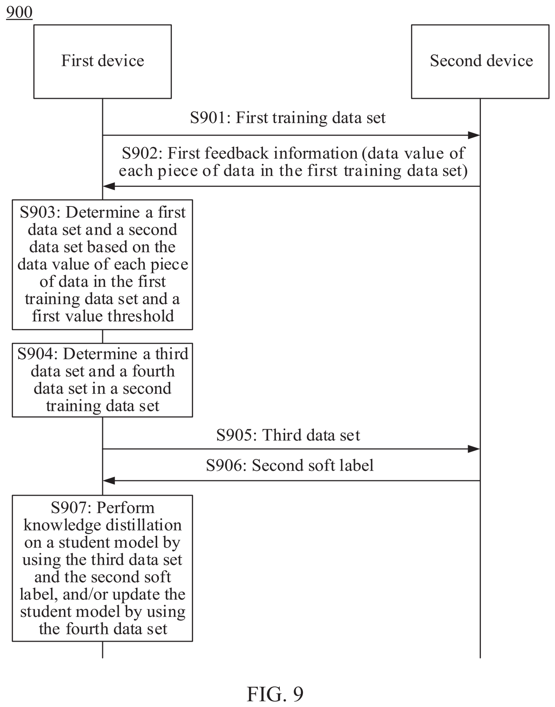

The first implementation of S340 is described in detail above. With reference to a method 900 shown in FIG. 9, a second implementation of S340 is described below. For the second implementation of S340, refer to S904 to S907 in the method 900.

For example, FIG. 9 is a schematic flowchart of a model training method according to this application. The method 900 may include S901 to S907.

S901 to S903 are the same as S310 to S330. Refer to S310 to S330.

Assuming that a first value threshold is a positive number, a first data set is data whose data value is greater than or equal to the first value threshold in a first training data set, and a second data set is data whose data value is less than the first value threshold in the first training data set.

S904: A first device determines a third data set and a fourth data set in a second training data set.

It should be understood that the second training data set may include data newly generated by the first device locally, or may include data obtained by the first device from another device. The first training data set and the second training data set may not include same data. However, this application does not exclude a case in which the first data set and the second data set include some or all same data.

When a first similarity threshold is a positive number, the third data set is data whose similarity to the first data set is greater than or equal to the first similarity threshold in the second training data set, and the fourth data set is data whose similarity to the first data set is less than the first similarity threshold in the second training data set. When a first similarity threshold is a negative number, the third data set is data whose similarity to the first data set is greater than or equal to an absolute value of the first similarity threshold in the second training data set, and the fourth data set is data whose similarity to the first data set is less than the absolute value of the first similarity threshold in the second training data set.

In a possible implementation, the first similarity threshold and/or a similarity calculation manner may be sent by the second device to the first device.

For example, the second device may send the first similarity threshold and/or the similarity calculation manner to the first device before S904. For another example, first feedback information may include the first similarity threshold and/or the similarity calculation manner.

In an example, the second device may determine the first similarity threshold based on currently available computing power of the first device and maximum available computing power of the first device.

For example, assuming that the maximum available computing power of the first device is 100 GFLOPS, and the currently available computing power is 85 GFLOPS, the similarity threshold=(maximum available computing power-currently available computing power)/maximum available computing power=0.15.

In an example, when data is picture data, similarity between first data and second data meets a formula (2):

$$PSNR = 10 * \lg(\frac{MAX_1^2}{MSE}) \quad (2)$$

The first data is any piece of data, PSNR is a similarity between the first data and the second data, and $MAX_1^2$ is a possible maximum pixel value of a picture represented by the first data. If each pixel is represented by an 8-bit binary, $MAX_1^2$ is 255. MSE represents a mean square error between the first data and the second data.

If a similarity between the first data and any piece of data in the first data set is calculated, the second data is the data in the first data set, and a similarity between the first data and the first data set is equal to an average value of sums of similarities between the first data and all pieces of data in the first data set.

It should be understood that a manner of calculating a similarity between any piece of data and a data set is similar. Details are not described herein again.

In another example, when the data is time series data, the similarity between the first data and the second data may be calculated by using a dynamic time warping (dynamic time warping, DTW) algorithm.

Specifically, the first data and the second data each are a series, and the first device may first calculate a distance matrix M between points in the two series. Then, the first device searches for a path from an upper left corner to a lower right corner of the matrix, so that a sum of elements on the path is minimum.

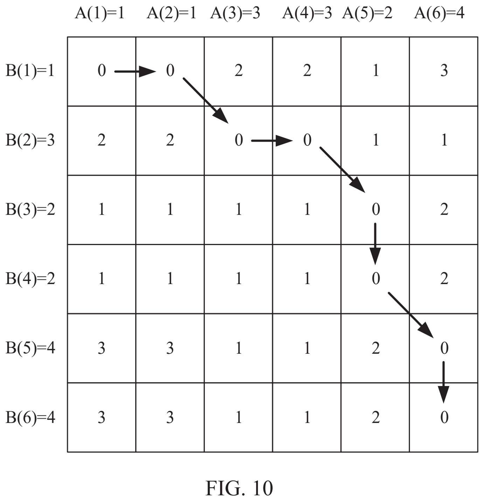

For example, if the first data is A=[1, 1, 3, 3, 2, 4], and the second data is B=[1, 3, 2, 2, 4, 4], for the matrix M, refer to FIG. 10. Any point in the matrix M is M(i, j)=|A(j)-B(i)|. A shortest path length $L_{min}$ (i, j) from the upper left corner (1, 1) to any point (i, j) of the matrix may be calculated by using the following formula (3):

$$L_{min}\left(i,\ j\right) = \min\left\{L_{min}\left(i,\ j\text{-}1\right),\ L_{min}\left(i\text{-}1,\ j\right),\ L_{min}\left(i\text{-}1,\ j\text{-}1\right)\right\} + M\left(i,\ j\right) \quad (3)$$

A path that is obtained through calculation by using the formula (3) and that enables the sum of elements on the path to be minimum in paths from the upper left corner to the lower right corner of the matrix is shown in FIG. 10. Because the sum of elements on the path is 0, the similarity between the first data and the second data is 0.

Optionally, the first similarity threshold and/or the similarity calculation manner may be preconfigured on the first device; or the first similarity threshold and/or the similarity calculation manner may be sent by another device to the first device.

S905: The first device sends the third data set to the second device. Correspondingly, the second device receives the third data set.

S906: The second device sends a second soft label to the first device. Correspondingly, the first device receives the second soft label.

Specifically, after receiving the third data set sent by the first device, the second device inputs the third data set into a teacher model, and an output of the teacher model is the second soft label.

S907: The first device performs knowledge distillation on a student model by using the third data set and the second soft label, and/or updates the student model by using the fourth data set.

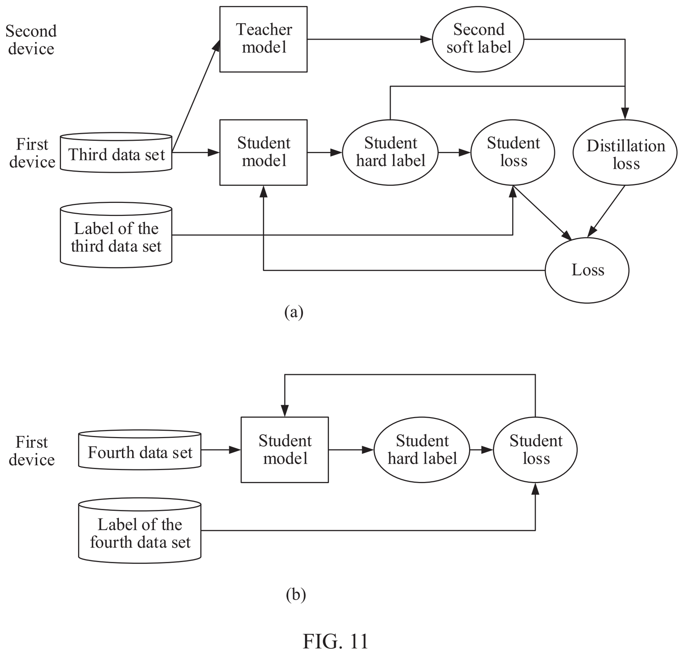

S907 is described with reference to FIG. 11.

(a) in FIG. 11 shows a process in which the first device performs knowledge distillation on the student model by using the third data set and the second soft label. Refer to (a) in FIG. 11. After obtaining the third data set based on the first similarity threshold, the first device inputs the third data set into the student model, and the student model outputs a student hard label. Then, the first device may obtain a distillation loss based on the second soft label and the student hard label, and may obtain a student loss based on the student hard label and a hard target corresponding to the third data set (that is, a label of the third data set). The first device calculates a loss of the student model based on the distillation loss and the student loss, and updates a parameter of the student model based on the loss.

(b) in FIG. 11 shows a process in which the first device updates the student model by using the fourth data set. Refer to (b) in FIG. 11. After obtaining the fourth data set based on the first similarity threshold, the first device inputs the fourth data set into the student model, and the student model outputs a student hard label. Then, the first device may obtain a student loss based on the student hard label and a hard target corresponding to the fourth data set (that is, a label of the fourth data set), and the first device may update a parameter of the student model based on the student loss.

It should be understood that, for meanings and calculation manners of various labels and various losses in FIG. 11, refer to the foregoing related descriptions of FIG. 1. Details are not described herein again.

The foregoing knowledge distillation and updating the student model by using the fourth data set may be performed simultaneously, or one of the two may be performed before the other. If knowledge distillation is first performed, and accuracy of the student model reaches a convergence condition in a knowledge distillation process, the student model may not be updated by using the fourth data set anymore; otherwise, the student model needs to be updated by using the fourth data set. Similarly, if the student model is first updated by using the fourth data set, and accuracy of the student model reaches a convergence condition in this process, knowledge distillation may not be performed anymore; otherwise, knowledge distillation needs to be performed.

If the accuracy of the student model still does not meet the convergence condition after the foregoing knowledge distillation is performed and the student model is updated by using the fourth data set, the first device may further update a training data set, and then repeat steps S904 to S907. It should be understood that, in this case, a training data set in S904 to S907 is no longer the second training data set, but an updated training data set, which may be referred to as, for example, a third training data set. In addition, the fourth data set and a fifth data set in the third training data set need to be determined in step S904.

Specifically, if the accuracy of the student model does not meet the convergence condition, the first device determines the fifth data set and the sixth data set in the third training data set. Then, the first device sends the fifth data set to the second device. After receiving the fifth data set, the second device inputs the fifth data set into the teacher model, to obtain an output third soft label. The second device sends the third soft label to the first device, and the first device performs knowledge distillation on the student model by using the fifth data set and the third soft label, and/or updates the student model by using the sixth data set.

When a second similarity threshold is a positive number, the fifth data set is data whose similarity to a seventh data set is greater than or equal to the second similarity threshold in the third training data set, and the sixth data set is data whose similarity to the seventh data set is less than the second similarity threshold in the third training data set. When a second similarity threshold is a negative number, the fifth data set is data whose similarity to a seventh data set is greater than or equal to an absolute value of the second similarity threshold in the third training data set, and the sixth data set is data whose similarity to the seventh data set is less than the absolute value of the second similarity threshold in the third training data set. The seventh data set is a union set of the first data set and the third data set.

The second similarity threshold may be the foregoing first similarity threshold. Alternatively, the second similarity threshold is a similarity threshold dynamically configured by the second device for the first device.

In an example, similar to a manner of determining the first similarity threshold, the second similarity threshold may be determined based on the currently available computing power of the first device and the maximum available computing power of the first device. It should be understood that, compared with available computing power of the first device when the second device determines the first similarity threshold, the available computing power of the first device may change when the second device determines the second similarity threshold. Therefore, the determined second similarity threshold may be different from the first similarity threshold.

Similar to the first similarity threshold, the second similarity threshold may be sent by another device to the first device, or may be determined by the first device based on the similarity calculation manner sent by the second device.

That the second device performs knowledge distillation on the student model by using the fifth data set and the third soft label is similar to that the second device performs knowledge distillation on the student model by using the third data set and the second soft label in S907. For details, refer to the foregoing related descriptions. Details are not described herein again. That the second device updates the student model by using the sixth data set is similar to that the second device updates the student model by using the fourth data set in S907. For details, refer to the foregoing related descriptions. Details are not described herein again.

According to the model training method provided in this application, the first device and the second device jointly perform model training. A similarity is introduced to extract and transmit data whose similarity to data with a high data value is high in a data set, knowledge distillation is performed by using the data whose similarity to the data with a high data value is high in the data set, and the student model is updated by using data whose similarity to the data with a high data value is low in the data set, so that a model convergence accuracy requirement can be met by using less data. In comparison with conventional knowledge distillation, data transmission is reduced, so that link resources are saved.

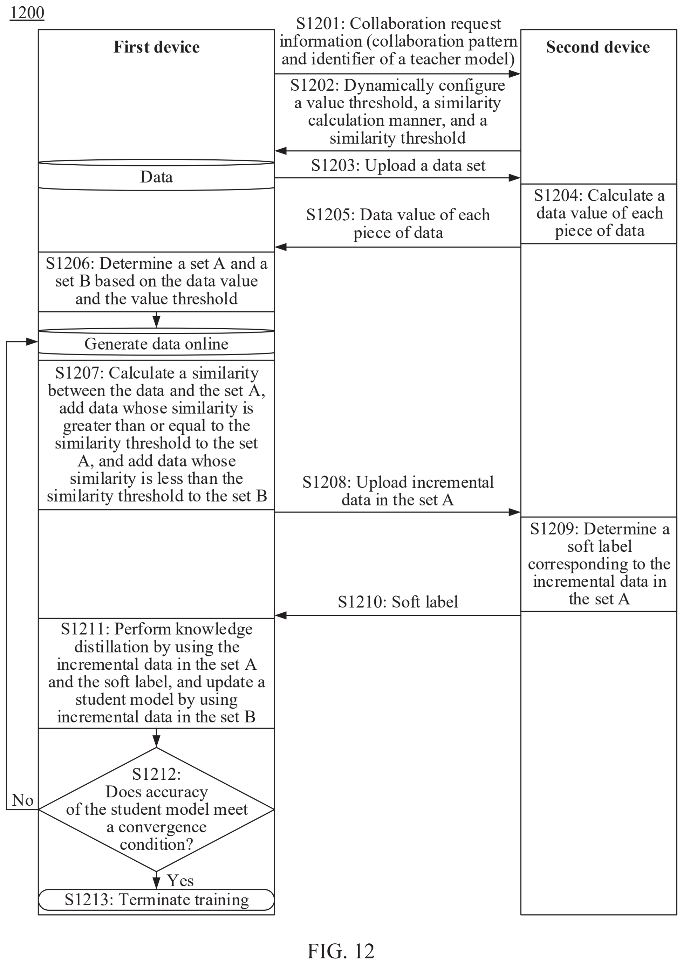

To make a person skilled in the art better understand this application, refer to FIG. 12. This application further provides a complete flowchart of model training in the foregoing second implementation.

For example, FIG. 12 is a schematic flowchart of a model training method according to this application. In the method, the second implementation is used in a process of training a student model. The method 1200 may include S1201 to S1213. The following describes the steps.

S1201: A first device initiates collaboration request information to a second device. Correspondingly, the second device receives the collaboration request information.

The collaboration request information includes a collaboration pattern (Pattern) and an identifier of a collaboration model. The collaboration pattern is knowledge distillation, and the identifier of the collaboration model is an identifier of a teacher model.

S1202: The second device dynamically configures a value threshold, a similarity calculation manner, and a similarity threshold.

The second device may sense currently available computing power of the first device, then calculate a value threshold of data based on the currently available computing power of the current first device, and dynamically configure the value threshold for the first device. It should be understood that, when the value threshold is dynamically configured, if the currently available computing power of the first device is large, a value of the value threshold is small; otherwise, a value of the value threshold is large.

The second device may further dynamically configure the similarity calculation manner and the similarity threshold based on a data type currently used by the model and the currently available computing power of the first device.

Because computing power of the second device is abundant compared with that of the first device, the second device configures the value threshold and the similarity threshold for the first device. Compared with calculating the value threshold and the similarity threshold by the first device, this does not increase load of the first device. In addition, the available computing power/a transmission rate of the first device may continuously change, and the value threshold, the similarity calculation manner, and the similarity threshold are dynamically configured to adapt to a scenario in which the computing power/the transmission rate of the first device changes. It should be understood that dynamically configured similarity thresholds in S1202 may be sequentially: a first similarity threshold, a second similarity threshold, ..., and the like.

In an alternative manner of S1202, the value threshold, the similarity calculation manner, and/or the similarity threshold may be configured only once, in other words, the value threshold, the similarity calculation manner, and/or the similarity threshold are not dynamically configured, but the value threshold, the similarity calculation manner, and/or the similarity threshold are set to fixed values in a complete training process.

S1203: The first device continuously generates a data stream online and/or continuously receives a data stream from another device online, where a part of data is used as an initial data set and sent to the second device. It should be understood that the initial data set is a first training data set.

S1204: After the second device receives the initial data set, the second device calculates a data value of each piece of data in the initial data set.

For how to calculate the data value of the data, refer to the foregoing related content. Details are not described herein again.

S1205: The second device sends the data value of each piece of data in the initial data set to the first device. Correspondingly, the first device receives the data value of each piece of data in the initial data set.

S1206: The first device determines a set A based on the data value of each piece of data in the initial data set and the value threshold. Optionally, the first device may further determine a set B.

Specifically, the first device divides the initial data set into the set A and the set B based on the data value of each piece of data in the initial data set and the value threshold. Assuming that the value threshold is an integer, the set A is data whose value is greater than or equal to the value threshold in the initial data set, and the set B is data whose value is less than the value threshold in the initial data set.

It should be understood that the set A is a first data set, and the set B is a second data set.

S1207: The first device continuously generates a data stream online and/or continuously receives a data stream from another device online, calculates a similarity between each piece of data in the data set and the set A at intervals of a time period (a fixed time periodicity or when a quantity of data pieces reaches a threshold), and adds data whose similarity is greater than or equal to the similarity threshold to the set A. Optionally, the first device may further add data whose similarity is less than the similarity threshold to the set B.

It should be understood that, if the data set in S1207 is a second training data set, the data added to the set A is a third data set, and the data added to the set B is a fourth data set. In addition, in this case, the set A includes the first data set and the third data set, and the set B includes the second data set and the fourth data set. After a next cycle is entered, the data set in S1207 becomes a third training data set. In this case, the data added to the set A is a fifth data set, and the data added to the set B is a sixth data set. In addition, in this case, the set A includes the first data set, the third data set, and the fifth data set, and the set B includes the second data set, the fourth data set, and the sixth data set.

S1208: The first device sends incremental data in the set A to the second device.

In other words, the first device uploads, to the second device, the data that is determined in step S1207 and whose similarity is greater than or equal to the similarity threshold. For example, if the data that is determined in S1207 and whose similarity is greater than or equal to the similarity threshold is the third data set, the incremental data in the set A and sent to the second device in S1208 is the third data set. After a next cycle is entered, the data that is determined in S1207 and whose similarity is greater than or equal to the similarity threshold becomes the fifth data set, and the incremental data in the set A and sent to the second device in S1208 is the fifth data set.

S1209: After receiving the data, the second device obtains, through calculation by using forward propagation of the teacher model, a soft label corresponding to each piece of data.

For how to calculate the data value of the data, refer to the foregoing related content. Details are not described herein again.

It should be understood that, if the incremental data in the set A and uploaded in step S1208 is the third data set, the soft label calculated in S1209 is a second soft label. After a next cycle is entered, the incremental data in the set A and uploaded in step S1208 is the fifth data set, and the soft label calculated in S1209 is a third soft label.

S1210: The second device sends the soft label to the first device. Correspondingly, the first device receives the soft label.

S1211: The first device performs knowledge distillation by using the incremental data in the set A and the soft label, and updates the student model by using incremental data in the set B.

In other words, the first device performs knowledge distillation by using the data that is determined in step S1207 and whose similarity is greater than or equal to the similarity threshold and the soft label obtained in step S1210, and updates the student model by using the data that is determined in step S1207 and whose similarity is less than the similarity threshold.

For this step, refer to the foregoing description of S907. Details are not described herein again.

S1212: The first device determines whether accuracy of the student model meets a convergence condition.

If the accuracy of the student model does not meet the convergence condition, S1207 to S1212 are repeatedly performed; otherwise, S1213 is performed, that is, training is terminated.

S1213: Terminate training.

According to the model training method provided in this application, the first device and the second device jointly perform model training. A similarity is introduced to extract data whose similarity to data with a high data value is high in a data set, knowledge distillation is performed by using the data whose similarity to the data with a high data value is high in the data set, and the student model is updated by using data whose similarity to the data with a high data value is low in the data set, so that a model convergence accuracy requirement can be met by using less data. In comparison with conventional knowledge distillation, data transmission is reduced, so that link resources are saved.

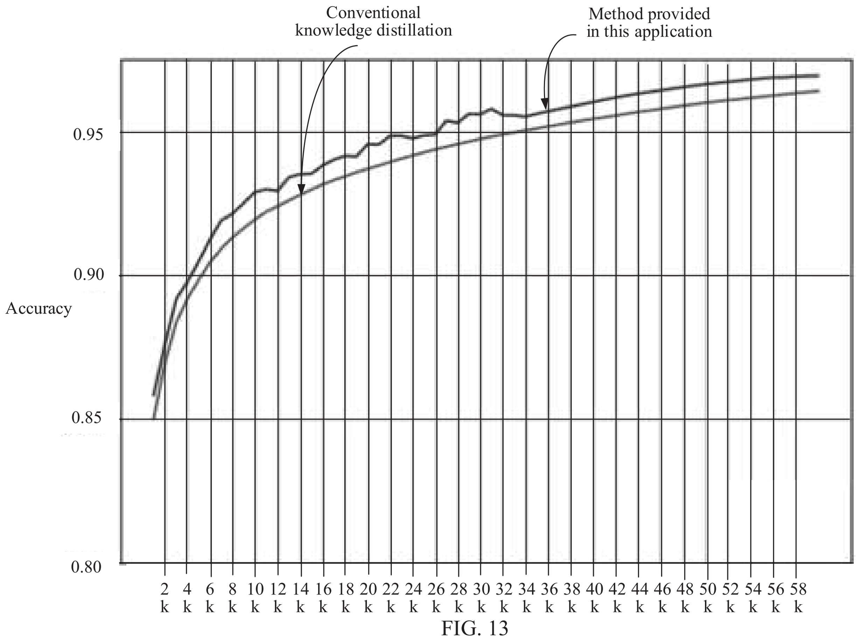

FIG. 13 is a diagram of relationships between a quantity of samples and accuracy obtained through model training by using a method (which may be specifically the method 900 or the method 1200) provided in this application and conventional knowledge distillation. Fashion-mnist is used for the data set, a quantity of parameters of the teacher model is 407,050, a quantity of parameters of the student model is 50,890, each sample is trained for 30 epochs, and target accuracy is 0.95. Refer to FIG. 13. 34k samples are needed to achieve the target accuracy by using conventional knowledge distillation, and only 26k samples are needed to achieve the target accuracy by using the method provided in this application. A simulation result indicates that in the second manner provided in this application, only a sample with data similarity being greater than or equal to the similarity threshold needs to be uploaded, that is, only 13K samples need to be uploaded to achieve model convergence. In comparison with conventional knowledge distillation, in the method provided in this application, a model convergence accuracy requirement can be met by using less data. This reduces data transmission, so that link resources are saved and communication efficiency is improved.

It should be noted that in all of the foregoing described embodiments, the second device calculates the data value. In an alternative manner, the data value may be calculated by the first device. For example, the second device may configure a data value calculation manner for the first device, and then the first device calculates the data value based on the data value calculation manner.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the method embodiments above. For brevity, details are not described herein again.

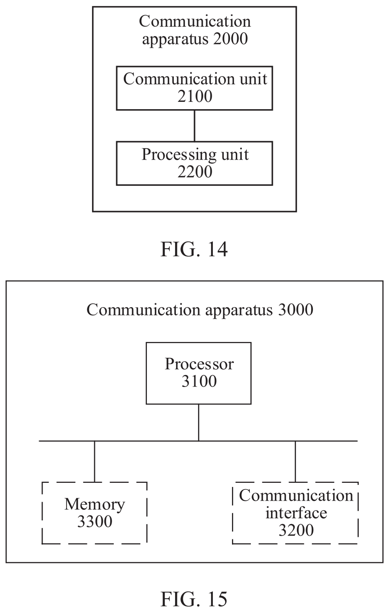

FIG. 14 is a block diagram of a communication apparatus according to an embodiment of this application. As shown in FIG. 14, the communication apparatus 2000 may include a communication unit 2100 and a processing unit 2200. The communication unit 2100 may implement a corresponding communication function. The communication may be internal communication of the communication apparatus 2000 or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, to cause the apparatus to implement the foregoing method embodiments.

In a possible design, the communication apparatus 2000 may be the first device in the foregoing method 300, or may be a module or a chip used in the first device. The communication apparatus 2000 may be configured to perform steps or procedures performed by the first device in the foregoing method embodiments.

Specifically, the communication unit 2100 is configured to send a first training data set to a second device, where the first training data set includes at least one piece of data. The communication unit 2100 is further configured to receive first feedback information from the second device, where the first feedback information includes a data value of each piece of data in the first training data set. The processing unit 2200 is configured to determine a first data set and a second data set based on the data value of each piece of data in the first training data set and a first value threshold, where both data in the first data set and data in the second data set belong to the first training data set. The processing unit 2200 is further configured to perform model training on a student model based on the first data set and the second data set.

Optionally, the first feedback information further includes a first soft label, and the first soft label is an output obtained by the second device by using the first training data set as an input of a teacher model. The processing unit 2200 is specifically configured to: perform knowledge distillation on the student model by using the first data set and a soft label corresponding to the first data set in the first soft label, and/or update the student model by using the second data set, where the first data set is data whose data value is greater than or equal to the first value threshold in the first training data set, the second data set is data whose data value is less than the first value threshold in the first training data set, and the first value threshold is a positive number.

Optionally, the processing unit 2200 is further specifically configured to: determine whether accuracy of the student model meets a convergence condition; if the accuracy of the student model does not meet the convergence condition, control the communication unit 2100 to send a second training data set to the second device, where the second training data set includes at least one piece of data; control the communication unit 2100 to receive second feedback information from the second device, where the second feedback information includes a second soft label and a data value of each piece of data in the second training data set, and the second soft label is an output obtained by the second device by using the second training data set as an input of the teacher model; determine a third data set and a fourth data set based on the data value of each piece of data in the second training data set and a second value threshold, where the third data set is data whose data value is greater than or equal to the second value threshold in the second training data set, the fourth data set is data whose data value is less than the second value threshold in the second training data set, and the second value threshold is a positive number; and perform model training on the student model based on the third data set, the fourth data set, and the second soft label.

Optionally, the processing unit 2200 is specifically configured to: determine a third data set and a fourth data set in a second training data set, where the third data set is data whose similarity to the first data set is greater than or equal to a first similarity threshold in the second training data set, the fourth data set is data whose similarity to the first data set is less than the first similarity threshold in the second training data set, the first similarity threshold is a positive number, and the first data set is data whose data value is greater than or equal to the first value threshold in the first training data set; control the communication unit 2100 to send the third data set to the second device; control the communication unit 2100 to receive a second soft label from the second device, where the second soft label is an output obtained by the second device by using the third data set as an input of a teacher model; and perform knowledge distillation on the student model by using the third data set and the second soft label, and/or update the student model by using the fourth data set.

Optionally, the processing unit 2200 is further specifically configured to determine whether accuracy of the student model meets a convergence condition; if the accuracy of the student model does not meet the convergence condition, determine a fifth data set and a sixth data set in a third training data set, where the fifth data set is data whose similarity to a seventh data set is greater than or equal to a second similarity threshold in the third training data set, the sixth data set is data whose similarity to the seventh data set is less than the second similarity threshold in the third training data set, the second similarity threshold is a positive number, and the seventh data set includes data in the first data set and data in the third data set; control the communication unit 2100 to send the fifth data set to the second device; control the communication unit 2100 to receive a third soft label from the second device, where the third soft label is an output obtained by the second device by using the fifth data set as an input of the teacher model; and perform knowledge distillation on the student model by using the fifth data set and the third soft label, and/or update the student model by using the sixth data set.

Optionally, the communication unit 2100 is further configured to receive the first value threshold from the second device.

Optionally, the communication unit 2100 is further configured to receive the second value threshold from the second device.

Optionally, both the first value threshold and the second value threshold are positively correlated to currently available computing power of the apparatus.

Optionally, the communication unit 2100 is further configured to receive the first similarity threshold and/or a similarity calculation manner from the second device, where the similarity calculation manner is used to calculate a similarity between any piece of data in the second training data set and the first data set.

Optionally, the communication unit 2100 is further configured to receive the second similarity threshold from the second device.

Optionally, the communication unit 2100 is further configured to send collaboration request information to the second device, where the collaboration request information includes a collaboration pattern and an identifier of a collaboration model, the collaboration pattern is knowledge distillation, and the identifier of the collaboration model is an identifier of the teacher model.

In another possible design, the communication apparatus 2000 may be the second device in the foregoing method, or may be a module or a chip used in the second device. The communication apparatus 2000 may be configured to perform steps or procedures performed by the second device in the foregoing method embodiments.

Specifically, the communication unit 2100 is configured to receive at least one piece of data from a first device. The processing unit 2200 is configured to determine a data value of each of the at least one piece of data. The communication unit 2100 is further configured to send first feedback information to the first device, where the first feedback information includes the data value of each of the at least one piece of data, and the data value of each of the at least one piece of data is used to determine data used for knowledge distillation and data used for student model update.

Optionally, the processing unit 2200 is further configured to input the at least one piece of data into a teacher model, to obtain a soft label output by the teacher model, where the soft label is used to perform the knowledge distillation.

Optionally, the communication unit 2100 is further configured to send a value threshold to the first device, where the value threshold is used to determine, based on the data value of the data, the data used for the knowledge distillation and the data used for the student model update.

Optionally, the communication unit 2100 is further configured to send a similarity threshold and/or a similarity calculation manner to the first device, where the similarity calculation manner is used to calculate a data similarity, and the similarity threshold is used to determine, based on the data similarity, the data used for the knowledge distillation and the data used for the student model update.

For details about steps or procedures performed by units in the communication apparatus 2000, refer to the foregoing method 300. Details are not described herein again.

It should be understood that, the "unit" in the communication apparatus 2000 may be implemented by hardware, or may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another appropriate component that supports the described function. For another example, the communication unit 2100 may be replaced with a transceiver or a transceiver circuit (which, for example, may include a receiver circuit and a transmitter circuit), and the processing unit 2200 may be replaced with a processor or a processing circuit.

FIG. 15 shows a block diagram of another communication apparatus 3000 according to an embodiment of this application. The apparatus 3000 may be a first device or a second device, or may be a chip, a chip system, a processor, or the like that supports the first device or the second device in implementing the foregoing methods. The apparatus may be configured to implement the methods described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like, for example, may be a baseband processor or a central processing unit. The baseband processor may be configured to process a communication protocol and communication data. The central processing unit may be configured to control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, to enable the apparatus 3000 to perform the methods described in the foregoing method embodiments.

In another optional design, the apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together.

The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300. The memory 3300 may store instructions. The instructions may be run on the processor 3100, to enable the apparatus 3000 to perform the methods described in the foregoing method embodiments. Optionally, the memory 3300 may further store data. Optionally, the processor 3100 may also store instructions and/or data. The processor 3100 and the memory 3300 may be separately arranged, or may be integrated together.

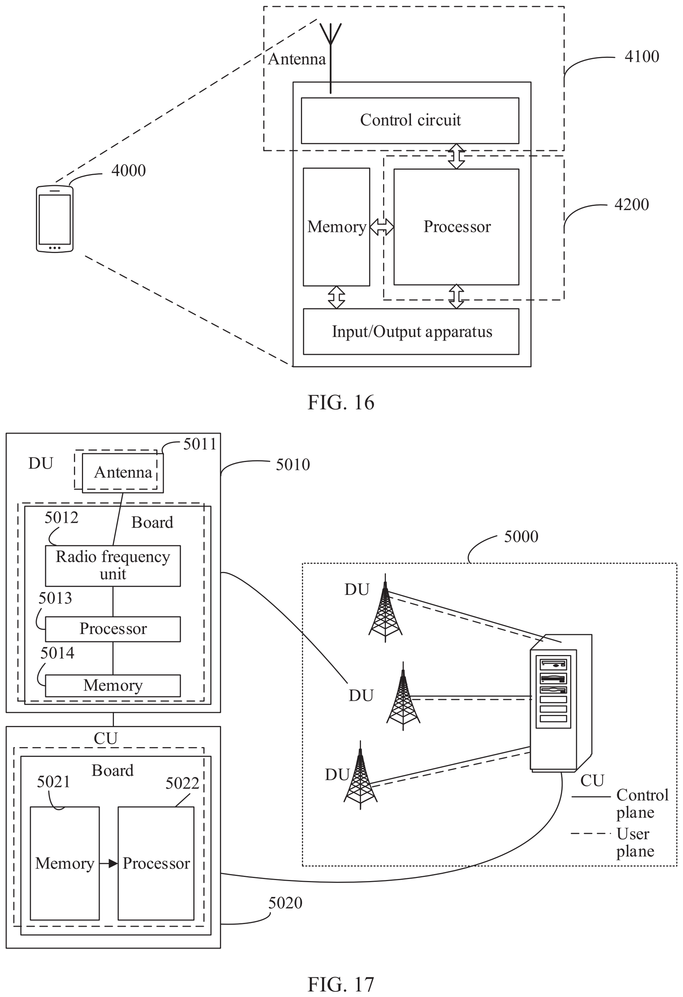

FIG. 16 is a diagram of a structure of a terminal 4000 according to this application. The communication apparatus 2000 or the communication apparatus 3000 may be configured in the terminal 4000. Alternatively, the communication apparatus 2000 or the communication apparatus 3000 may be the terminal 4000. In other words, the terminal 4000 may perform actions performed by the terminal in the foregoing method embodiments. Optionally, for ease of description, FIG. 16 shows only main components of the terminal. As shown in FIG. 16, the terminal 4000 includes a processor, a memory, a control circuit, an antenna, and an input/output apparatus.

The processor is mainly configured to process a communication protocol and communication data, control the entire terminal, execute a software program, and process data of the software program, for example, is configured to support the terminal in performing the action described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to receive data input by a user and output data to the user.

After the terminal is powered on, the processor may read the software program from the storage unit, interpret and execute an instruction of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through an antenna, a radio frequency signal in an electromagnetic wave form. When data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 16 shows only one memory and one processor. In an actual terminal, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal, execute the software program, and process the data of the software program. Functions of the baseband processor and the central processing unit are integrated into the processor in FIG. 16. A person skilled in the art may understand that the baseband processor and the central processing unit each may be an independent processor, and are interconnected by using technologies such as a bus. A person skilled in the art may understand that the terminal may include a plurality of baseband processors to adapt to different network standards, and the terminal may include a plurality of central processing units to enhance a processing capability of the terminal. All the components of the terminal may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 4100 of the terminal 4000, and the processor that has a processing function may be considered as a processing unit 4200 of the terminal 4000. As shown in FIG. 16, the terminal 4000 includes the transceiver unit 4100 and the processing unit 4200. The transceiver unit may also be referred to as a transceiver, a transceiver device, a transceiver apparatus, or the like. Optionally, a component configured to implement a receiving function in the transceiver unit 4100 may be considered as a receiving unit, and a component configured to implement a sending function in the transceiver unit 4100 may be considered as a sending unit. That is, the transceiver unit 4100 includes the receiving unit and the sending unit. For example, the receiving unit may also be referred to as a receiver, a receive machine, or a receiving circuit, and the sending unit may also be referred to as a transmitter, a transmit machine, or a transmitting circuit.

FIG. 17 is a diagram of a structure of a network device 5000 according to an embodiment of this application. The communication apparatus 2000 or the communication apparatus 3000 may be configured in the network device 5000.

Alternatively, the communication apparatus 2000 or the communication apparatus 3000 may be the network device 5000. In other words, the network device 5000 may perform the actions performed by the network device in the foregoing method embodiments.

As shown in FIG. 17, the network device 5000 may include one or more DUs 5010 and one or more CUs 5020. The CU 5020 may communicate with an NG core (next generation core network, NC). The DU 5010 may include at least one antenna 5011, at least one radio frequency unit 5012, at least one processor 5013, and at least one memory 5014. The DU 5010 is mainly configured to receive and send a radio frequency signal, convert a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to perform baseband processing, control the network device 5000, and the like. The DU 5010 and the CU 5020 may be physically disposed together, or may be physically separated, namely, in a distributed base station. The CU 5020 is a control center of the network device 5000, may also be referred to as a processing unit, and is mainly configured to complete a baseband processing function. For example, the CU 5020 may be configured to control the network device 5000 to perform the operation procedures related to the first device or the second device in the foregoing method embodiments.

Specifically, baseband processing of the CU and the DU may be divided based on a protocol layer of a wireless network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio frequency units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may separately support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may further be disposed on each board. The DU 5010 may include one or more boards. A plurality of boards may jointly support a radio access network (for example, a 5G network) of a single access standard, or may separately support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may further be disposed on each board.

It should be understood that the network device 5000 shown in FIG. 17 can implement processes of actions performed by the first device or the second device in the foregoing method embodiments. Operations and/or functions of modules in the network device 5000 are respectively for implementing corresponding procedures in the foregoing method embodiments. For details, refer to the descriptions in the foregoing method embodiments. To avoid repetition, detailed descriptions are properly omitted herein.

It should be understood that the network device 5000 shown in FIG. 17 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

It should be understood that, in a possible design, steps in the method embodiments provided in this application may be completed by using a hardware integrated logic circuit in a processor or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software.

The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform steps or procedures performed by the first device or the second device in any one of the foregoing method embodiments.

This application further provides a computer-readable storage medium. The computer-readable storage medium stores program code. When the program code is run on a computer, the computer is enabled to perform steps or procedures performed by the first device or the second device in any one of the foregoing method embodiments.

This application further provides a communication apparatus, including a processor and an interface. The interface is configured to send and/or receive a signal, so that the processor performs the steps or procedures performed by the first device or the second device in any one of the foregoing method embodiments.

This application further provides a communication system, including at least one of a first device and a second device.

The foregoing apparatus embodiments completely correspond to the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement same or similar functions in an existing or future protocol.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the function units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A model training method, applied to a first device, wherein the method comprises:

sending a first training data set to a second device, wherein the first training data set comprises at least one piece of data;
receiving first feedback information from the second device, wherein the first feedback information comprises a data value of each piece of data in the first training data set;
determining a first data set and a second data set based on the data value of each piece of data in the first training data set and a first value threshold, wherein both data in the first data set and data in the second data set belong to the first training data set; and

performing model training on a student model based on the first data set and the second data set.

2. The method according to claim 1, wherein the first feedback information further comprises a first soft label, and the first soft label is an output obtained by the second device by using the first training data set as an input of a teacher model; and

the performing model training on the student model based on the first data set and the second data set comprises: performing knowledge distillation on the student model by using the first data set and a soft label corresponding to the first data set in the first soft label, and/or updating the student model by using the second data set, wherein the first data set is data whose data value is greater than or equal to the first value threshold in the first training data set, the second data set is data whose data value is less than the first value threshold in the first training data set, and the first value threshold is a positive number.

3. The method according to claim 2, wherein the performing model training on the student model based on the first data set and the second data set further comprises:

determining whether accuracy of the student model meets a convergence condition;
if the accuracy of the student model does not meet the convergence condition, sending a second training data set to the second device, wherein the second training data set comprises at least one piece of data;
receiving second feedback information from the second device, wherein the second feedback information comprises a second soft label and a data value of each piece of data in the second training data set, and the second soft label is an output obtained by the second device by using the second training data set as an input of the teacher model;
determining a third data set and a fourth data set based on the data value of each piece of data in the second training data set and a second value threshold, wherein the third data set is data whose data value is greater than or equal to the second value threshold in the second training data set, the fourth data set is data whose data value is less than the second value threshold in the second training data set, and the second value threshold is a positive number; and
performing model training on the student model based on the third data set, the fourth data set, and the second soft label.

4. The method according to claim 1, wherein the performing model training on the student model based on the first data set and the second data set comprises:

determining a third data set and a fourth data set in a second training data set, wherein the third data set is data whose similarity to the first data set is greater than or equal to a first similarity threshold in the second training data set, the fourth data set is data whose similarity to the first data set is less than the first similarity threshold in the second training data set, the first similarity threshold is a positive number, and the first data set is data whose data value is greater than or equal to the first value threshold in the first training data set;
sending the third data set to the second device;
receiving a second soft label from the second device, wherein the second soft label is an output obtained by the second device by using the third data set as an input of a teacher model; and
performing knowledge distillation on the student model by using the third data set and the second soft label, and/or updating the student model by using the fourth data set.

5. The method according to claim 4, wherein the performing model training on the student model based on the first data set and the second data set further comprises:

determining whether accuracy of the student model meets a convergence condition;
if the accuracy of the student model does not meet the convergence condition, determining a fifth data set and a sixth data set in a third training data set, wherein the fifth data set is data whose similarity to a seventh data set is greater than or equal to a second similarity threshold in the third training data set, the sixth data set is data whose similarity to the seventh data set is less than the second similarity threshold in the third training data set, the second similarity threshold is a positive number, and the seventh data set comprises data in the first data set and data in the third data set;
sending the fifth data set to the second device;
receiving a third soft label from the second device, wherein the third soft label is an output obtained by the second device by using the fifth data set as an input of the teacher model; and
performing knowledge distillation on the student model by using the fifth data set and the third soft label, and/or updating the student model by using the sixth data set.

6. The method according to any one of claims 1 to 5, wherein before the determining the first data set and the second data set based on the data value of each piece of data in the first training data set and the first value threshold, the method further comprises:
receiving the first value threshold from the second device.

7. The method according to claim 3, wherein before the determining the third data set and the fourth data set based on the data value of each piece of data in the second training data set and the second value threshold, the method further comprises:
receiving the second value threshold from the second device.

8. The method according to claim 3 or 7, wherein both the first value threshold and the second value threshold are positively correlated to currently available computing power of the first device.

9. The method according to claim 4 or 5, wherein before the determining the third data set and the fourth data set in the second training data set, the method further comprises:
receiving the first similarity threshold and/or a similarity calculation manner from the second device, wherein the similarity calculation manner is used to calculate a similarity between any piece of data in the second training data set and the first data set.

10. The method according to claim 5, wherein before the determining the fifth data set and the sixth data set in the third training data set, the method further comprises:
receiving the second similarity threshold from the second device.

11. The method according to any one of claims 2 to 5, wherein before the sending the first training data set to the second device, the method further comprises:
sending collaboration request information to the second device, wherein the collaboration request information comprises a collaboration pattern and an identifier of a collaboration model, the collaboration pattern is knowledge distillation, and the identifier of the collaboration model is an identifier of the teacher model.

12. A model training method, applied to a second device, wherein the method comprises:

receiving at least one piece of data from a first device;
determining a data value of each of the at least one piece of data; and
sending first feedback information to the first device, wherein the first feedback information comprises the data value of each of the at least one piece of data, and the data value of each of the at least one piece of data is used by the first device to determine data used for knowledge distillation and data used for student model update.

13. The method according to claim 12, wherein the first feedback information further comprises a soft label; and before the sending the feedback information to the first device, the method further comprises:
inputting the at least one piece of data into a teacher model, to obtain the soft label output by the teacher model, wherein the soft label is used by the first device to perform the knowledge distillation.

14. The method according to claim 12 or 13, wherein the method further comprises:
sending a value threshold to the first device, wherein the value threshold is used by the first device to determine, based on the data value of the data, the data used for the knowledge distillation and the data used for the student model update.

15. The method according to any one of claims 12 to 14, wherein the method further comprises:
sending a similarity threshold and/or a similarity calculation manner to the first device, wherein the similarity calculation manner is used to calculate a data similarity, and the similarity threshold is used by the first device to determine, based on the data similarity, the data used for the knowledge distillation and the data used for the student model update.

16. A communication apparatus, comprising:

a communication unit, configured to send a first training data set to a second device, wherein the first training data set comprises at least one piece of data, wherein

the communication unit is further configured to receive first feedback information from the second device, wherein the first feedback information comprises a data value of each piece of data in the first training data set; and

a processing unit, configured to determine a first data set and a second data set based on the data value of each piece of data in the first training data set and a first value threshold, wherein both data in the first data set and data in the second data set belong to the first training data set, wherein

the processing unit is further configured to perform model training on a student model based on the first data set and the second data set.

17. The apparatus according to claim 16, wherein the first feedback information further comprises a first soft label, and the first soft label is an output obtained by the second device by using the first training data set as an input of a teacher model; and

the processing unit is specifically configured to:

perform knowledge distillation on the student model by using the first data set and a soft label corresponding to the first data set in the first soft label, and/or updating the student model by using the second data set, wherein the first data set is data whose data value is greater than or equal to the first value threshold in the first training data set, the second data set is data whose data value is less than the first value threshold in the first training data set, and the first value threshold is a positive number.

18. The apparatus according to claim 17, wherein the processing unit is specifically further configured to:

determine whether accuracy of the student model meets a convergence condition;

if the accuracy of the student model does not meet the convergence condition, control the communication unit to send a second training data set to the second device, wherein the second training data set comprises at least one piece of data;

control the communication unit to receive second feedback information from the second device, wherein the second feedback information comprises a second soft label and a data value of each piece of data in the second training data set, and the second soft label is an output obtained by the second device by using the second training data set as an input of the teacher model;

determine a third data set and a fourth data set based on the data value of each piece of data in the second training data set and a second value threshold, wherein the third data set is data whose data value is greater than or equal to the second value threshold in the second training data set, the fourth data set is data whose data value is less than the second value threshold in the second training data set, and the second value threshold is a positive number; and

perform model training on the student model based on the third data set, the fourth data set, and the second soft label.

19. The apparatus according to claim 16, wherein the processing unit is specifically configured to:

determine a third data set and a fourth data set in a second training data set, wherein the third data set is data whose similarity to the first data set is greater than or equal to a first similarity threshold in the second training data set, the fourth data set is data whose similarity to the first data set is less than the first similarity threshold in the second training data set, the first similarity threshold is a positive number, and the first data set is data whose data value is greater than or equal to the first value threshold in the first training data set;

control the communication unit to send the third data set to the second device;

control the communication unit to receive a second soft label from the second device, wherein the second soft label is an output obtained by the second device by using the third data set as an input of a teacher model; and

perform knowledge distillation on the student model by using the third data set and the second soft label, and/or update the student model by using the fourth data set.

20. The apparatus according to claim 19, wherein the processing unit is specifically further configured to:

determine whether accuracy of the student model meets a convergence condition;

if the accuracy of the student model does not meet the convergence condition, determine a fifth data set and a sixth data set in a third training data set, wherein the fifth data set is data whose similarity to a seventh data set is greater than or equal to a second similarity threshold in the third training data set, the sixth data set is data whose similarity to the seventh data set is less than the second similarity threshold in the third training data set, the second similarity threshold is a positive number, and the seventh data set comprises data in the first data set and data in the third data set;

control the communication unit to send the fifth data set to the second device;

control the communication unit to receive a third soft label from the second device, wherein the third soft label is an output obtained by the second device by using the fifth data set as an input of the teacher model; and

perform knowledge distillation on the student model by using the fifth data set and the third soft label, and/or update the student model by using the sixth data set.

21. The apparatus according to any one of claims 16 to 20, wherein the communication unit is further configured to:
receive the first value threshold from the second device.

22. The apparatus according to claim 18, wherein the communication unit is further configured to:
receive the second value threshold from the second device.

23. The apparatus according to claim 18 or 22, wherein both the first value threshold and the second value threshold are positively correlated to currently available computing power of the apparatus.

24. The apparatus according to claim 19 or 20, wherein the communication unit is further configured to:
receive the first similarity threshold and/or a similarity calculation manner from the second device, wherein the similarity calculation manner is used to calculate a similarity between any piece of data in the second training data set and the first data set.

25. The apparatus according to claim 20, wherein the communication unit is further configured to:
receive the second similarity threshold from the second device.

26. The apparatus according to any one of claims 17 to 20, wherein the communication unit is further configured to:
send collaboration request information to the second device, wherein the collaboration request information comprises a collaboration pattern and an identifier of a collaboration model, the collaboration pattern is knowledge distillation, and the identifier of the collaboration model is an identifier of the teacher model.

27. A communication apparatus, comprising:

a communication unit, configured to receive at least one piece of data from a first device; and

a processing unit, configured to determine a data value of each of the at least one piece of data, wherein the communication unit is further configured to send first feedback information to the first device, wherein the first feedback information comprises the data value of each of the at least one piece of data, and the data value of each of the at least one piece of data is used to determine data used for knowledge distillation and data used for student model update.

28. The apparatus according to claim 27, wherein the processing unit is further configured to:
input the at least one piece of data into a teacher model, to obtain a soft label output by the teacher model, wherein the soft label is used to perform the knowledge distillation.

29. The apparatus according to claim 27 or 28, wherein the communication unit is further configured to:
send a value threshold to the first device, wherein the value threshold is used to determine, based on the data value of the data, the data used for the knowledge distillation and the data used for the student model update.

30. The apparatus according to any one of claims 27 to 29, wherein the communication unit is further configured to:
send a similarity threshold and/or a similarity calculation manner to the first device, wherein the similarity calculation manner is used to calculate a data similarity, and the similarity threshold is used to determine, based on the data similarity, the data used for the knowledge distillation and the data used for the student model update.

31. A communication apparatus, comprising a processor, wherein the processor is coupled to a memory, the memory is configured to store a program or instructions, and when the program or the instructions are executed by the processor, the apparatus is enabled to perform the method according to any one of claims 1 to 11 or any one of claims 12 to 15.

32. A communication apparatus, comprising a processor and an interface, wherein the interface is configured to send and/or receive a signal, enabling the processor to perform the method according to any one of claims 1 to 11 or any one of claims 12 to 15.

33. A readable storage medium, wherein the readable storage medium stores a computer program or instructions, and when the computer program or the instructions are executed, the computer is enabled to perform the method according to any one of claims 1 to 11 or any one of claims 12 to 15.

34. A computer program product, comprising computer program instructions, wherein the computer program instructions enable a computer to perform the method according to any one of claims 1 to 11 or any one of claims 12 to 15.

35. A communication system, comprising the apparatus according to any one of claims 16 to 26, and/or the apparatus according to any one of claims 27 to 30.

Device with large computing power

Device with small computing power

Teacher model

Soft label

Local data

Student model

Student hard label

Student loss

Distillation loss

Local label

Loss

FIG. 1

Communication system 200

First device 210

Second device 220

FIG. 2

300

```
┌─────────────────┐                              ┌─────────────────┐
│  First device   │                              │  Second device  │
└─────────────────┘                              └─────────────────┘
         │                                                 │
         │      S310: First training data set              │
         │────────────────────────────────────────────────▶│
         │                                                 │
         │  S320: First feedback information (data value of│
         │  each piece of data in the first training data set)│
         │◀────────────────────────────────────────────────│
         │                                                 │
┌─────────────────────┐                                    │
│ S330: Determine a first                                  │
│ data set and a second                                    │
│ data set based on the data                               │
│ value of each piece of                                   │
│ data in the first training                               │
│ data set and a first value                               │
│ threshold            │                                    │
└─────────────────────┘                                    │
┌─────────────────────┐                                    │
│ S340: Perform model │                                    │
│ training on a student                                    │
│ model based on the first                                 │
│ data set and the second                                  │
│ data set            │                                     │
└─────────────────────┘                                    │
         │                                                 │
```

FIG. 3

Model backward propagation

```
  ┌──────────┐      ┌──────────────┐      ┌──────────────┐
  │Local data│─────▶│Loss prediction│────▶│Output of the │
  └──────────┘      │    model     │      │loss prediction│
       │            └──────────────┘      │    model     │      ╭──────────╮
       │                                  └──────────────┘      │Calculate a│
       │                                                        │loss of the loss│
       │            ┌──────────────┐      ┌──────────────┐      │prediction │
       └───────────▶│Teacher model │─────▶│Loss of the   │─────▶│  model   │
  ┌──────────┐      └──────────────┘      │teacher model │      ╰──────────╯
  │Local label│                           └──────────────┘
  └──────────┘                                   ▲
       │                                         │
       └─────────────────────────────────────────┘
```

FIG. 4

500

```
┌─────────────────┐                              ┌─────────────────┐
│   First device  │                              │  Second device  │
└────────┬────────┘                              └────────┬────────┘
         │                                                │
         │        S501: First training data set           │
         ├───────────────────────────────────────────────►│
         │                                                │
         │     S502: First feedback information (data     │
         │     value of each piece of data in the first   │
         │      training data set and first soft label)   │
         │◄───────────────────────────────────────────────┤
         │                                                │
┌────────┴────────┐                                       │
│ S503: Determine │                                       │
│  a first data   │                                       │
│ set and a second│                                       │
│ data set based  │                                       │
│ on the data     │                                       │
│ value of each   │                                       │
│ piece of data   │                                       │
│ in the first    │                                       │
│ training data   │                                       │
│ set and a first │                                       │
│ value threshold │                                       │
└────────┬────────┘                                       │
┌────────┴────────┐                                       │
│ S504: Perform   │                                       │
│ knowledge       │                                       │
│ distillation on │                                       │
│ a student model │                                       │
│ by using the    │                                       │
│ first data set  │                                       │
│ and a soft label│                                       │
│ corresponding to│                                       │
│ the first data  │                                       │
│ set in the first│                                       │
│ soft label,     │                                       │
│ and/or update   │                                       │
│ the student     │                                       │
│ model by using  │                                       │
│ the second data │                                       │
│ set             │                                       │
└────────┬────────┘                                       │
         │                                                │
```

FIG. 5

(a)

(b)

FIG. 6

700

| First device | S701: Collaboration request information (collaboration pattern and identifier of a teacher model) | Second device |
|---|---|---|

S702: Dynamically configure a value threshold

S703: Upload a data set

Data

S704: Determine a soft label and a data value of each piece of data

S705: Soft label and data value of each piece of data

S706: Determine a set A and a set B based on the data value of each piece of data

S707: Perform knowledge distillation by using the set A and a soft label corresponding to the set A in the soft label, and update a student model by using the set B

S708: Does accuracy of the student model meet a convergence condition?

No

Yes

S709: Terminate training

FIG. 7

FIG. 8

900

First device             Second device

S901: First training data set

S902: First feedback information (data value of each piece of data in the first training data set)

S903: Determine a first data set and a second data set based on the data value of each piece of data in the first training data set and a first value threshold

S904: Determine a third data set and a fourth data set in a second training data set

S905: Third data set

S906: Second soft label

S907: Perform knowledge distillation on a student model by using the third data set and the second soft label, and/or update the student model by using the fourth data set

FIG. 9

|         | A(1)=1 | A(2)=1 | A(3)=3 | A(4)=3 | A(5)=2 | A(6)=4 |
|---------|--------|--------|--------|--------|--------|--------|
| B(1)=1  | 0      | 0      | 2      | 2      | 1      | 3      |
| B(2)=3  | 2      | 2      | 0      | 0      | 1      | 1      |
| B(3)=2  | 1      | 1      | 1      | 1      | 0      | 2      |
| B(4)=2  | 1      | 1      | 1      | 1      | 0      | 2      |
| B(5)=4  | 3      | 3      | 1      | 1      | 2      | 0      |
| B(6)=4  | 3      | 3      | 1      | 1      | 2      | 0      |

FIG. 10

Second
device

First
device

Teacher
model

Second
soft label

Third data set

Student
model

Student
hard label

Student
loss

Distillation
loss

Label of the
third data set

Loss

(a)

First
device

Fourth data set

Student
model

Student
hard label

Student
loss

Label of the
fourth data set

(b)

FIG. 11

1200

| **First device** | S1201: Collaboration request information (collaboration pattern and identifier of a teacher model) | **Second device** |
|---|---|---|
| | S1202: Dynamically configure a value threshold, a similarity calculation manner, and a similarity threshold | |
| Data | S1203: Upload a data set | |
| | | S1204: Calculate a data value of each piece of data |
| | S1205: Data value of each piece of data | |
| S1206: Determine a set A and a set B based on the data value and the value threshold | | |
| Generate data online | | |
| S1207: Calculate a similarity between the data and the set A, add data whose similarity is greater than or equal to the similarity threshold to the set A, and add data whose similarity is less than the similarity threshold to the set B | S1208: Upload incremental data in the set A | |
| | | S1209: Determine a soft label corresponding to the incremental data in the set A |
| | S1210: Soft label | |
| S1211: Perform knowledge distillation by using the incremental data in the set A and the soft label, and update a student model by using incremental data in the set B | | |
| S1212: Does accuracy of the student model meet a convergence condition? | | |
| No | | |
| Yes | | |
| S1213: Terminate training | | |

FIG. 12

FIG. 13

Method provided in this application

Conventional knowledge distillation

Accuracy

0.95
0.90
0.85
0.80

2 4 6 8 10 12 14 16 18 20 22 24 26 28 30 32 34 36 38 40 42 44 46 48 50 52 54 56 58
k k k k k k k k k k k k k k k k k k k k k k k k k k k k k

Communication
apparatus 2000

Communication unit
2100

Processing unit
2200

FIG. 14

Communication apparatus 3000

Processor
3100

Memory
3300

Communication
interface
3200

FIG. 15

FIG. 16

FIG. 17

## INTERNATIONAL SEARCH REPORT

| | International application No. |
|---|---|
| | **PCT/CN2023/081653** |

**A. CLASSIFICATION OF SUBJECT MATTER**

G06N20/00(2019.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, WOTXT, EPTXT, USTXT, CNTXT, CNKI, IEEE: 模型, 训练, 教师, 老师, 学生, 数据集, 反馈, 价值, 阈值, 不确定性, 第一, 第二, model, training, teacher, student, dataset, feedback, value, threshold, uncertainty, first, second

**C. DOCUMENTS CONSIDERED TO BE RELEVANT**

| Category* | Citation of document, with indication, where appropriate, of the relevant passages | Relevant to claim No. |
|---|---|---|
| A | CN 112749728 A (TENCENT TECHNOLOGY (SHENZHEN) CO., LTD.) 04 May 2021 (2021-05-04) description, paragraphs [0050]-[0069] | 1-35 |
| A | CN 111489365 A (SHANGHAI SENSETIME LINGANG INTELLIGENT TECHNOLOGY CO., LTD.) 04 August 2020 (2020-08-04) entire document | 1-35 |
| A | CN 112200255 A (ZHEJIANG UNIVERSITY) 08 January 2021 (2021-01-08) entire document | 1-35 |
| A | CN 114330510 A (PEKING UNIVERSITY et al.) 12 April 2022 (2022-04-12) entire document | 1-35 |
| A | CN 113987196 A (ZHEJIANG UNIVERSITY) 28 January 2022 (2022-01-28) entire document | 1-35 |
| A | WO 2022016556 A1 (HUAWEI TECHNOLOGIES CO., LTD.) 27 January 2022 (2022-01-27) entire document | 1-35 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 July 2023** | **24 July 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081653**

| Patent document cited in search report | | | Publication date (day/month/year) | Patent family member(s) | | | Publication date (day/month/year) |
|---|---|---|---|---|---|---|---|
| CN | 112749728 | A | 04 May 2021 | HK | 40043537 | A0 | 17 September 2021 |
| CN | 111489365 | A | 04 August 2020 | None | | | |
| CN | 112200255 | A | 08 January 2021 | None | | | |
| CN | 114330510 | A | 12 April 2022 | None | | | |
| CN | 113987196 | A | 28 January 2022 | None | | | |
| WO | 2022016556 | A1 | 27 January 2022 | EP | 4180991 | A1 | 17 May 2023 |
| | | | | US | 2023162005 | A1 | 25 May 2023 |

Form PCT/ISA/210 (patent family annex) (July 2022)